# EUROPÄISCHE PATENTSCHRIFT

(11) **EP 1 380 523 B1**
(45) Veröffentlichungstag und Bekanntmachung des Hinweises auf die Patenterteilung: **16.11.2005**
(21) Anmeldenummer: 03013713.7
(22) Anmeldetag: 17.06.2003
(51) Int. Cl.: B65G 47/53, B65G 47/88

(54) **Übergabeeinrichtung für stückhaftes Fördergut**
Transferring device for piece-goods
Dispositif de transfert pour articles individuels

(30) Priorität: 11.07.2002 AT 10452002
(43) Veröffentlichungstag der Anmeldung: 14.01.2004
(73) Patentinhaber: TGW-TRANSPORTGERÄTE GMBH, A-4600 Wels (AT)
(72) Erfinder: Wolkerstorfer, Christoph, Ing., 4174 Niederwaldkirchen (AT)
(74) Vertreter: Secklehner, Günter

(56) Entgegenhaltungen:
- EP-A- 0 254 261
- DE-A- 3 513 381

## Beschreibung

Die Erfindung betrifft eine Übergabeeinrichtung für stückhaftes Fördergut zwischen einer ersten Fördervorrichtung und wenigstens einer weiteren, dazu quer oder winkelig verlaufenden Fördervorrichtung, wie sie im Oberbegriff des Anspruches 1 beschrieben ist.

Übergabeeinrichtungen zur Umsetzung von einstückigem Fördergut zwischen winkelig zueinander verlaufenden Fördervorrichtungen sind aus dem Stand der Technik in vielfältigen Ausführungen bekannt. Um diese Fördergüter, wie z.B. Waren, Pakete, Werkstücke, Werkstückträger oder sogenannte Tablare von einer Förderbahn auf die nächste umsetzen zu können, ist die Transportgeschwindigkeit des Fördergutes im Eck- bzw. Kreuzungsbereich der Förderbahnen üblicherweise zu reduzieren. Um heutigen Leistungsanforderungen zu genügen, sind relativ hohe Transportgeschwindigkeiten für die Fördergüter vorgesehen, die an solchen Umsetzeinrichtungen wieder reduziert werden müssen, um das entweder Fördergut oder auch die Mechanik der Umsetzeinrichtung zu schonen. Bei Fördersystem mit kleinen Nutzlasten sind Anschlagdämpfer bzw. sogenannte Stopper eingesetzt, die das Fördergut entweder direkt und abrupt oder gedämpft stoppen. Derartige Anschlagvorrichtungen sind z.B. aus der DE 35 13 381 A1 oder aus der DE 196 00 266 C2 oder aus der DE 198 132 416 A1 bekannt. Vor allem bei höheren Fördergutgewichten von beispielsweise 300 kg sind nur mehr relativ aufwendige, abfedernde bzw. dämpfende Anschlagvorrichtungen einzusetzen. Deren Aufbau ist dann bereits relativ komplex. Auch die Kosten und Wartungsintervalle derartiger Anschlagdämpfer sind nicht zufriedenstellend. Weiters müssen die Fördergüter mit derartigen Anschlagvorrichtungen innerhalb relativ kurzer Verzögerungswege abgebremst bzw. gestoppt werden, wodurch die Belastungen der Anschlagvorrichtung selbst als auch der sonstigen Mechanik des Fördersystems hoch sind. Zudem ist die Dämpfungswirkung derartiger Anschlagvorrichtungen nur schwer bzw. nur mit hohem Aufwand an eine große Bandbreite von Fördergutgewichten anpaßbar.

Der vorliegenden Erfindung liegt die Aufgabe zugrunde, eine Übergabeeinrichtung bzw. ein sogenanntes Knotenmodul für verzweigte Fördersysteme zu schaffen, mit welchem herangefördertes Fördergut innerhalb kurzer Zeit abgebremst und an eine quer verlaufende Fördervorrichtung übergeben werden kann, ohne dass dabei eine aufwendige elektrische Steuerung oder komplexe Anschlagelemente für das Fördergut erforderlich sind.

Die Aufgabe der Erfindung wird durch die Merkmale im Kennzeichenteil des Anspruches 1 gelöst. Vorteilhaft ist bei dieser erfindungsgemäßen Übergabeeinrichtung, dass das Fördergut mittels der wahlweise aktivier- und deaktivierbaren, d.h. anheb- und absenkbaren Bremsvorrichtung durch entsprechend bemessene Gleitreibung in seiner Fördergeschwindigkeit gezielt abgebremst werden kann und somit dessen Bewegungsenergie via die Bremsvorrichtung zumindest teilweise abgebaut werden kann. Ein abruptes bzw. schlagartiges Stoppen des Fördergutes im Bereich der Übergabeeinrichtung wird also vermieden, wodurch die Beanspruchung der einzelnen Komponenten der Übergabeeinrichtung innerhalb relativ problemlos zu beherrschender Belastungsgrenzen bleibt. Vor allem auch bei relativ hohen Fördergutgewichten, von z.B. mehr als 50 kg, kann ein gedämpftes bzw. sanftes und dennoch kurzfristiges Abbremsen des Fördergutes erzielt werden. Weiters ist von Vorteil, dass via die Hub- und Fördervorrichtung für das umzusetzende Fördergut eine besonders blockierungs- bzw. störungsfreie Übergabe des Fördergutes an eine quer verlaufende Fördervorrichtung erzielbar ist, da das Fördergut ausreichend hoch über die quer verlaufenden Komponenten des sogenannten Zu- bzw. Längsförderers angehoben und nahezu widerstandsfrei weitertransportiert bzw. übergeben werden kann. Dies begünstigt die Erzielung niedriger Umsetzzeiten bzw. hoher Fördergeschwindigkeiten. Ferner ist von besonderem Vorteil, dass die Verstellmechaniken, insbesondere die Stellvorrichtungen für die Bremsvorrichtung und die Hub-und Fördervorrichtung bewegungsgekoppelt sind, sodass sich eine simultane Einleitung und Stillsetzung der Bewegungen der Bremsvorrichtung und der Anhebe- und Absenkfunktion der Hub- und Fördervorrichtung einstellt. Zudem wird durch die mechanische Bewegungskopplung eine besonders wiederholgenaue, kinematische Bewegung der Bremsvorrichtung relativ zur Hub- und Absenkfunktion der Hub- und Fördervorrichtung erzielt. Ein sogenanntes "Auseinanderlaufen" bzw. "Auseinanderdriften" der Bewegungsabläufe der Bremsvorrichtung gegenüber den Bewegungsabläufen der Hub- und Fördervorrichtung, wie dies bei elektrischen Ablaufsteuerungen unter Umständen auftreten könnte, ist bei der erfindungsgemäßen Ausgestaltung nahezu ausgeschlossen. Da die Stellbewegungen der Bremsvorrichtung und der Hub- und Fördervorrichtung lediglich von einer einzigen Antriebsvorrichtung eingeleitet bzw. gestoppt werden, sind auch wesentliche steuerungstechnische Vereinfachungen zur Abwicklung der einzelnen Bewegungsabläufe an der erfindungsgemäßen Übergabeeinrichtung erzielbar.

Von Vorteil ist auch eine mögliche Ausführungsform nach Anspruch 2, da dadurch auch weitläufige Förderstrecken problemlos überbrückt werden können und die Geräuschentwicklung niedrig gehalten werden kann.

Eine Fördervorrichtung entsprechend der Ausbildung wie sie im Anspruch 3 beschrieben ist, kann problemlos zwischen die beiden Förderspuren der ersten Fördervorrichtung integriert werden, um die Übergabe des Fördergutes an eine weitere, quer verlaufende Fördervorrichtung zu ermöglichen. Von Vorteil ist weiters, dass eine Stützfläche für das Fördergut relativ großzügig dimensioniert werden kann, wodurch ein sicheres Anheben und der Quertransport des Fördergutes begünstigt ist.

Durch die Ausführung gemäß Anspruch 4 ist ein gleichmäßiges Anheben und Absenken sämtlicher Förderrollen der Hub- und Fördervorrichtung sichergestellt.

Vorteilhaft sind auch die Ausbildungen nach den Ansprüchen 5 und 6, da dadurch die Antriebsorgane zur Bereitstellung der Förderfunktion der Hub- und Fördervorrichtung mit dem Hubgestell bzw. Hubtisch mitbewegt werden und somit aufwendige Vorrichtungen für einen Längenausgleich bzw. eine Überbrückung von variablen Distanzen erübrigt sind.

Durch die Ausführung gemäß Anspruch 7 ist ein im Vergleich zu Ansteuerungen für eine Antriebsumkehr der Antriebsvorrichtung deutlich einfacherer Steuerungsaufbau für die Übergabeeinrichtung ermöglicht.

Durch eine vorteilhafte Weiterbildung gemäß Anspruch 8 kann die Last, insbesondere das Fördergut, auch bei abgeschalteter Antriebsvorrichtung auf einem gewünschten Höhenniveau gehalten werden, ohne dabei durch an die Übergabeeinrichtung anschließende bzw. an der Übergabeeinrichtung ausgebildete, in ihrem Transportniveau unveränderliche Fördervorrichtungen unterstützt zu werden bzw. auf diesen lasttragend abgestützt zu sein.

Durch die vorteilhafte Ausgestaltung gemäß Anspruch 9 kann eine Antriebsvorrichtung eingesetzt werden, die an ihrem Abtrieb eine rotatorische Antriebsbewegung bereitstellt, welche in eine translatorische bzw. sich umkehrende Schwenkbewegung umgesetzt wird.

Durch die Ausführung gemäß Anspruch 10 ist in vorteilhafter Art und Weise eine besonders einfache Ansteuerung der Antriebsvorrichtung erzielt. Innerhalb eines solchen, eindeutig festgelegten Arbeitszyklus wird dabei die Bremsvorrichtung aktiviert und wieder deaktiviert und gleichzeitig auch die Hub- und Fördervorrichtung angehoben und wieder abgesenkt.

Weiters können durch eine Ausführung gemäß Anspruch 11 Verklemmungen bzw. Verkantungen, wie diese bei Linearführungen nur mit relativ großem Aufwand vermieden werden können, zuverlässig ausgeschaltet werden und können dennoch die erforderlichen Hub- bzw. Stellweiten problemlos erzielt werden.

Durch die vorteilhafte Ausbildung gemäß Anspruch 12 bzw. 13 kann die Bewegungscharakteristik bzw. die Stellweite der Bremsvorrichtung im Vergleich zur Bewegungscharakteristik bzw. Stellweite der Hub- und Fördervorrichtung unterschiedlich gestaltet werden. Insbesondere kann dem geforderten Bewegungsablauf Rechnung getragen bzw. die während einzelner Phasen gegenläufige Relativbewegung zwischen Bremsvorrichtung und Hub- und Fördervorrichtung in einfacher Art und Weise sowie besonders zuverlässig umgesetzt werden.

Durch die Ausbildung gemäß Anspruch 14 kann das erforderliche Drehmoment problemlos auf den Schwinghebel übertragen werden und ist eine effektive Bewegungskopplung mit der Antriebsvorrichtung geschaffen.

Gemäß der Ausgestaltung nach Anspruch 15 ist eine einfache und relativ wartungsfreie Verbindung geschaffen, nachdem verhältnismäßig verschleißanfällige Linearführungen erübrigt sind.

Durch die Ausführung gemäß Anspruch 16 ist die Bewegungscharakteristik der Hub- und Fördervorrichtung bzw. der Bremsvorrichtung quasi vorprogrammiert und sind weiters hohe Drehmomente bzw. Kräfte übertragbar.

Durch die vorteilhafte Weiterbildung gemäß Anspruch 17 kann auch dann, wenn an die Stellarme zusätzliche Bewegungsübertragungsglieder anschließen, ein weiter Verstell- bzw. Verschwenkbereich für die Trägerwelle bzw. die Stellarme erreicht werden.

Bei einer vorteilhaften Weiterbildung nach Anspruch 18 können hohe Förderlasten zuverlässig angehoben und abgebremst werden. Darüber hinaus können Gleitführungen bzw. Kulissenbahnen für die Vertikalbewegung der Bremsvorrichtung erübrigt werden.

Entsprechend der Ausführung gemäß Anspruch 19 sind Gleitführungen bzw. Kulissenbahnen für die Anhebung und Absenkung der Hub- und Fördervorrichtung vermieden. Zudem ist auch bei höheren Belastungen bzw. schweren Fördergütern eine präzise und verwindungsfreie sowie langfristig störungsfreie Anhebung und Absenkung der Hub- und Fördervorrichtung erzielbar.

Durch die Ausbildung gemäß Anspruch 20 wird in einfacher Art und Weise eine Bewegungskopplung zwischen den zueinander distanzierten Stellvorrichtungen bewirkt, ohne dass eigenständige bzw. zusätzliche Koppelelemente erforderlich sind.

Durch die Ausführung gemäß Anspruch 21 bzw. 22 wird eine stabile und ortsfeste Drehlagerung für die Trägerwelle und die Schwinghebel bzw. Stellarme erzielt.

Durch eine Ausbildung gemäß Anspruch 23 bzw. 24 wird in vorteilhafter Weise erreicht, dass Linearführungen bzw. Kulissenbahnen, welche einem vergleichsweise hohen Verschleiß unterliegen und bei welchen die Gefahr von Verklemmungen bzw. Verkantungen relativ hoch ist, erübrigt sind.

Durch die vorteilhafte Ausgestaltung nach Anspruch 25 kann ein von der Bremsvorrichtung übernommenes Fördergut kontinuierlich abgebremst und durch die bogenförmige Bewegung in Förderrichtung quasi gedämpft abgefangen werden. Insbesondere ist ein rasches und dennoch relativ sanftes Abfangen von an der Übergabeeinrichtung einlangenden Fördergütern erreichbar. Durch die aktive Bewegung der Bremsvorrichtung in Richtung der Transportrichtung eines abzubremsenden Fördergutes können auch die auf die Übergabeeinrichtung einwirkenden Belastungen verringert werden.

Mittels der vorteilhaften Weiterbildung gemäß Anspruch 26 können nur teilweise abgebremste bzw. verzögerte Fördergüter definiert und wiederholgenau an einer bestimmten Position relativ zur Übergabeeinrichtung gestoppt und wenigstens teilweise entsprechend einer gewünschten Orientierung ausgerichtet werden. Aufgrund der vorangegangenen Verzögerung des Fördergutes ist die vom Anschlagelement aufzunehmende Aufprallenergie bereits verringert, wodurch eine Schonung für die Komponenten der Übergabeeinrichtung und/oder für das Fördergut erreicht wird.

Von Vorteil ist dabei eine Ausführung nach Anspruch 27, da dadurch in einfacher Art und Weise ein bedarfsweise aktivier- und deaktivierbares Anschlagelement gebildet ist, dessen Aktivierung und Deaktivierung in vorteilhafter Weise mit der Hub- und Absenkfunktion der Hub- und Fördervorrichtung kombiniert ist.

Von besonderem Vorteil ist auch die Maßnahme gemäß Anspruch 28, da dadurch die Bremsvorrichtung auch eine aktive Ausrichtfunktion erfüllt, indem das abgebremste Fördergut aktiv gegen das Anschlagelement gedrängt bzw. gedrückt wird und somit eine relativ hohe Ausrichtgenauigkeit und Zuverlässigkeit bei der Ausrichtung schiefwinkelig bzw. verdreht einlaufender Fördergüter erzielt ist. Dies begünstigt wiederum die Erzielung hoher Transport- bzw. Förderleistungen.

Durch die alternative Ausgestaltung gemäß Anspruch 29 kann ebenso eine wahlweise aktivier- und deaktivierbare Anschlagvorrichtung erzielt werden, indem diese via die Bremsvorrichtung bedarfsweise anheb- und absenkbar ist.

Durch die besondere Ausgestaltung nach Anspruch 30 wird erreicht, dass die Bremsvorrichtung ausgehend von einem ersten Niveau in ein vergleichsweise höheres Niveau und auf ein weiteres, tiefer liegendes Niveau überführbar ist, ohne dass eine Umkehrung der Antriebsbewegung, insbesondere der Antriebsvorrichtung erforderlich ist. Insbesondere wird in vorteilhafter Art und Weise auch bei unidirektionaler Antriebsbewegung der Antriebsvorrichtung, sowohl eine Hub- als auch eine Absenkbewegung für die Bremsvorrichtung erzielt.

Durch die vorteilhafte Dimensionierung gemäß Anspruch 31 wird eine besonders einfache Ansteuerung der Antriebsvorrichtung ermöglicht. Insbesondere ist keine Drehrichtungsumkehr erforderlich, um einen vollständigen Arbeitszyklus für die Bremsvorrichtung und zugleich auch für die Hub- und Absenkfunktion der Hub- und Fördervorrichtung auszuführen. Nach Ablauf eines derartigen Arbeitszyklusses ist die Übergabeeinrichtung wieder einsatzbereit, um ein weiteres Fördergut zwischen zwei winkelig zueinander verlaufenden Fördervorrichtungen umzusetzen.

Eine besonders stabile, wartungsfreie und zwingende Bewegungskopplung zwischen der Stellvorrichtung und der Bremsvorrichtung ist in Anspruch 32 angegeben. Insbesondere wird dadurch sichergestellt, dass die Bremsvorrichtung aktiv angehoben und aktiviert sowie aktiv abgesenkt und deaktiviert wird.

Durch die vorteilhafte Ausgestaltung gemäß Anspruch 33 kann die Stellweite bzw. der Stellweg für die Bremsvorrichtung größer gewählt werden, als die Hubhöhe bzw. Stellweite für die Hub- und Fördervorrichtung.

Von besonderem Vorteil sind auch die Maßnahmen gemäß Anspruch 34, da dadurch bei unidirektionaler Verschwenkung des Stellarmes eine Anheb- und Absenkbewegung der Bremsvorrichtung erzielt wird, während die Hub- und Fördervorrichtung kontinuierlich angehoben wird. D.h., dass die Bremsvorrichtung eine bidirektionale Vertikalbewegung ausführt, während die Hubvorrichtung unidirektional angehoben oder abgesenkt wird. Dadurch kann in vorteilhafter Art und Weise erzielt werden, dass die Bremsvorrichtung bzw. die Bremsleisten in der höchsten Stellung der Hub- und Fördervorrichtung gegenüber dem Fördergut wieder außer Eingriff sind, sodass eine ungehinderte bzw. ungebremste Querförderung für das Fördergut eingeleitet werden kann. Diese spezielle Hebelkinematik ermöglicht also in einfacher Art und Weise die lasttragende Umsetzung des Fördergutes von der Bremsvorrichtung auf die Hub- und Fördervorrichtung. Insbesondere wird erzielt, dass während der Anhebebewegung der Hub- und Fördervorrichtung die Bremsvorrichtung ab einer gewissen Stellung wieder abgesenkt wird und somit das Fördergut von der Bremsvorrichtung an die Hub- und Fördervorrichtung übergeben wird. Ein zwischen den beiden Stellarmen eingeschlossener Winkel beträgt dabei weniger als 90°.

Schließlich ist eine alternative Weiterbildung gemäß Anspruch 35 von Vorteil, da das Fördergut im Endbereich des verfügbaren Brems- bzw. Verzögerungsweges zwingend gestoppt bzw. zum Stillstand gebracht wird.

Die Erfindung wird im nachfolgenden anhand der in den Zeichnungen dargestellten Ausführungsbeispiele näher erläutert.

Es zeigen:
- Fig. 1: eine erfindungsgemäß ausgebildete Übergabeeinrichtung bzw. ein sogenanntes Knotenmodul für ein verzweigtes Fördersystem in perspektivischer Darstellung;
- Fig. 2: die Übergabeeinrichtung gemäß Fig. 1 in Explosionsdarstellung;
- Fig. 3: die Übergabeeinrichtung gemäß Fig. 1 in Draufsicht;
- Fig. 4: die Übergabeeinrichtung nach Fig. 1 geschnitten, gemäß den Linien IV- IV in Fig. 3;
- Fig. 5: die Übergabeeinrichtung nach Fig. 1 in Frontansicht gemäß Pfeil V in Fig. 3;
- Fig. 6: die Übergabeeinrichtung nach Fig. 1 geschnitten gemäß den Linien VI - VI in Fig. 5 bei deaktivierter Bremsvorrichtung und inaktiver bzw. abgesenkter Hub-und Fördervorrichtung;
- Fig. 7: die Übergabeeinrichtung nach Fig. 6 bei über die Förderebene heraustretender, sich aktivierender Bremsvorrichtung und noch inaktiver Hub- und Fördervorrichtung;
- Fig. 8: die Übergabeeinrichtung nach Fig. 7 bei über die Förderebene der Zufördervorrichtung angehobenem Fördergut und deaktivierter Bremsvorrichtung;
- Fig. 9: eine Draufsicht auf eine mögliche Ausführungsform eines Fördersystem mit mehreren, erfindungsgemäßen Übergabeeinrichtungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

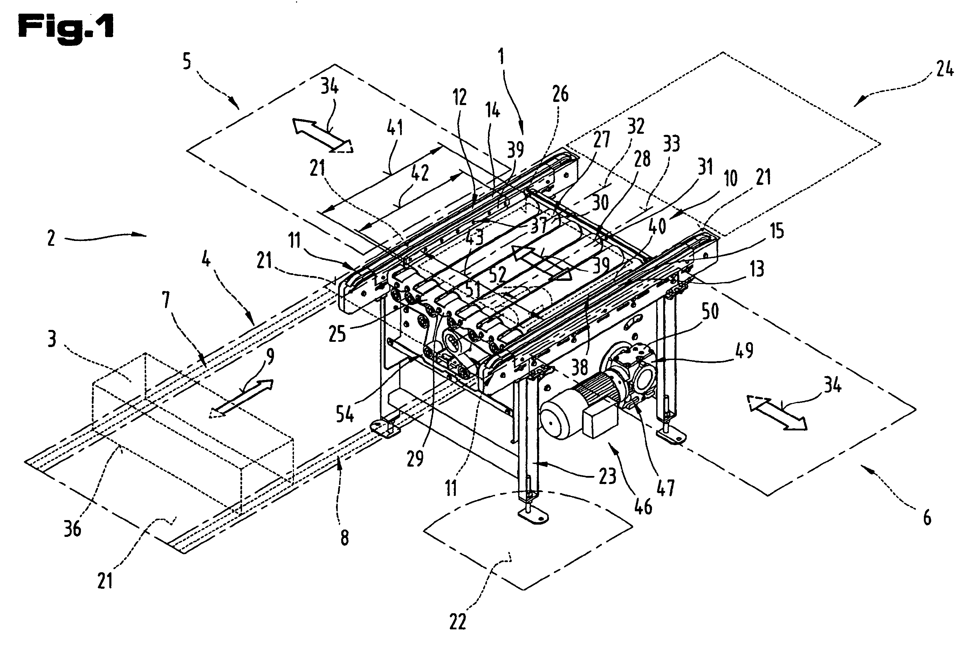

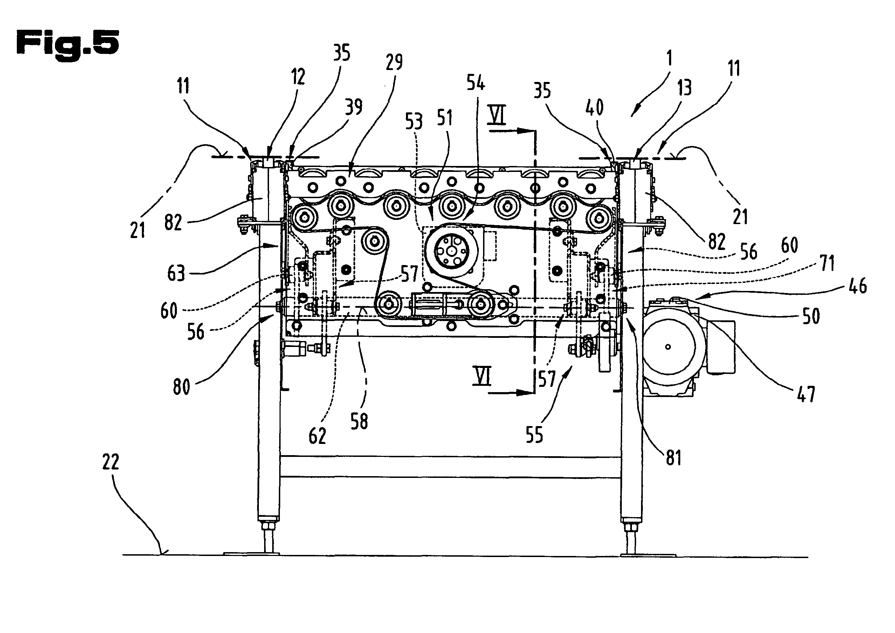

In den Fig. 1 bis 5 ist eine bevorzugte Ausführungsform der erfindungsgemäßen Übergabeeinrichtung 1 veranschaulicht. Diese Übergabeeinrichtung 1 kann dabei ein einzelnes Element bzw. Modul in einem mehr oder weniger komplexen Transport- bzw. Fördersystem für stückhaftes Fördergut 3 darstellen. Das stückhafte Fördergut 3 kann beispielsweise durch Pakete, Behälter, Werkstückträger oder Werkteile gebildet sein, welche innerhalb des aufgebauten Fördersystems 2 mittels mehrerer Fördervorrichtungen 4, 5, 6 an unterschiedliche, jeweils gewünschte bzw. geforderte Positionen verbracht werden sollen. Die einzelnen Abläufe in diesem verzweigten Fördersystem 2 erfolgen dabei wenigstens teilweise automatisiert, wozu eine zentrale Steuervorrichtung oder mehrere elektrische bzw. elektronische Steuervorrichtungen vorgesehen sind.

Die Übergabeeinrichtung 1 kann somit auch als sogenanntes Knotenmodul bezeichnet werden, welches entweder baulich eigenständig ausgebildet ist oder aber wenigstens teilweise durch vor- bzw. nachgeordnete Fördervorrichtungen 4 bis 6 gebildet wird bzw. einzelne Elemente und Funktionen von zugeordneten Einheiten mitbenutzt. Beispielsweise kann eine der Übergabeeinrichtung 1 zugeordnete - insbesondere vorgeordnete - Fördervorrichtung 4 derart ausgebildet sein, dass sich deren Förderorgane 7, 8 für das Fördergut 3 durchgehend bis innerhalb der Übergabeeinrichtung 1 erstrecken, wie dies mit strichpunktierten Linien angedeutet wurde. Insbesondere verlaufen dabei wenigstens zwei Förderorgane 7, 8 für das Fördergut 3 bezugnehmend auf eine Förderrichtung - Pfeil 9 - der vorgeordneten Fördervorrichtung 4 zumindest bis zum gegenüberliegenden Seiten- bzw. Randbereich 10 der Übergabeeinrichtung 1.

Anstelle dieser "Mitbenutzung" von Funktionselementen einer vor- bzw. zugeordneten Fördervorrichtung 4 ist es im Rahmen der Erfindung auch möglich, eine baulich eigenständige Fördervorrichtung 11 an der Übergabeeinrichtung 1 auszubilden, um das Fördergut 3 entlang der Förderrichtung - gemäß Pfeil 9 - wenigstens unidirektional bewegen zu können, wie dies durch die in den Fig. 1 bis 5 in vollen Linien dargestellte Fördervorrichtung 11 veranschaulicht wurde. In diesem Fall schließt eine der Übergabeeinrichtung 1 vor- bzw. zugeordnete Fördervorrichtung 4 an die direkt an der Übergabeeinrichtung 1 ausgebildete Fördervorrichtung 11 an. Der Übergang zwischen diesen Fördervorrichtungen 4 und 11 erfolgt dabei möglichst möglich lücken- bzw. spaltfrei und bevorzugt stufenlos, um eine ungestörte Überführung des Fördergutes 3 von der Fördervorrichtung 4 auf die Fördervorrichtung 11 und/oder umgekehrt zu erzielen. Die Förderorgane 12, 13 dieser Fördervorrichtung 11 können dabei typengleich oder andersartig zu den Förderorganen 7, 8 der Fördervorrichtung 4 ausgebildet sein. Vorzugsweise sind die wenigstens zwei Förderorgane 12, 13 der Fördervorrichtung 11 endlos bzw. als Endlosschleife ausgebildet und insbesondere durch Förderketten oder Förderriemen 14, 15 gebildet. Diese riemen-, ketten- bzw. bandförmigen Förderorgane 12, 13 sind dabei quer zur Förderrichtung - Pfeil 9 - zueinander beabstandet und bilden vorzugsweise einen sogenannten Zweispurförderer aus. Anstelle des bevorzugten Zweispurförderers ist es selbstverständlich auch möglich, einen Drei- oder Mehrspurförderer bzw. einen breitbandigen Förderer vorzusehen, um beispielsweise relativ nachgiebige bzw. wenig formstabile Fördergüter 3 sicher transportieren zu können.

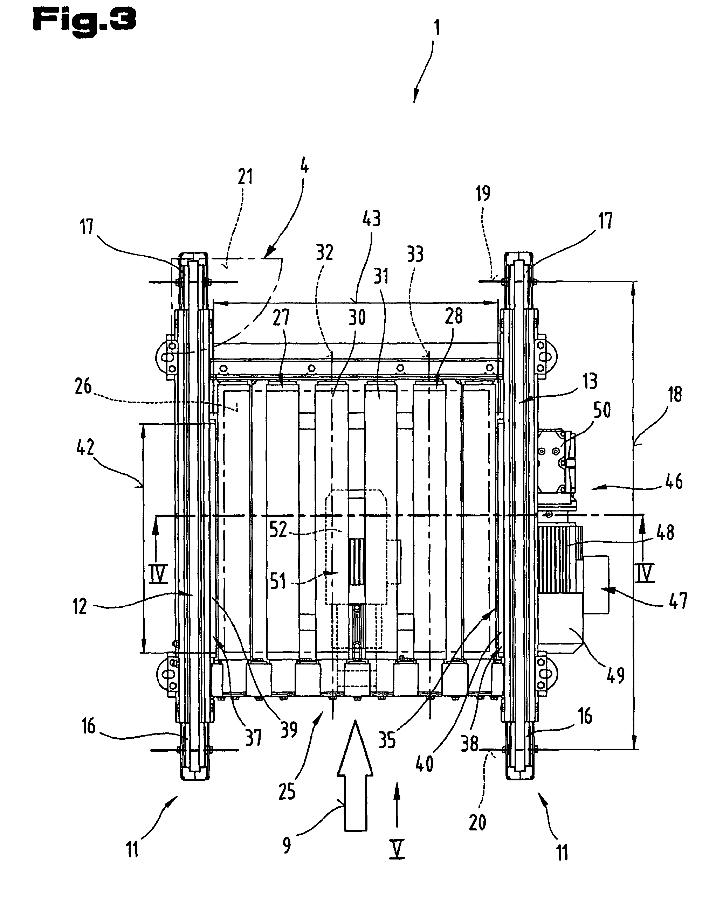

Ein Abstand bzw. eine Spurweite zwischen den band- bzw. riemenartigen Förderorganen 12, 13 ist im wesentlichen von den Abmessungen bzw. Eigenschaften des zu transportierenden Fördergutes 3 abhängig. Wie am besten aus Fig. 3 ersichtlich ist, sind diese Förderorgane 12, 13 jeweils um zueinander distanziert angeordnete Umlenkscheiben 16, 17 umlaufend geführt. Ein Abstand 18 zwischen Drehachsen 19, 20 zweier miteinander korrespondierender Umlenkscheiben 16, 17 entspricht dabei in etwa einer maximalen Förderlänge dieser bevorzugt zweispurigen, auf Förderriemen 14, 15 basierenden Fördervorrichtung 11.

Selbstverständlich ist es auch möglich, die Förderorgane 12, 13 der Fördervorrichtung 11 durch zumindest zwei, bevorzugt aber durch eine Mehrzahl von aneinander gereihten Rollen zu bilden, welche insgesamt die gewünschte Förderlänge für das Fördergut 3 ergeben. Insbesondere könnte anstelle des gezeigten Riemenförderers ein sogenannter Rollenförderer ausgebildet sein, mit welchem das Fördergut 3 bezugnehmend auf die Übergabeeinrichtung 1 zu- bzw. abgefördert wird. Ebenso ist eine Mischform möglich, bei der als Fördervorrichtung 11 ein Rollenförderer ausgebildet ist und für die daran anschließende bzw. quasi andockende Fördervorrichtung 4 ein Riemenförderer vorgesehen ist. Eine baulich umgekehrte Ausführung ist ebenso denkbar.

Die Förderorgane 12, 13 der Fördervorrichtung 11 und/oder die Förderorgane 7, 8 der Fördervorrichtung 4 definieren eine in wesentlichen horizontale Förderebene 21, auf welcher das Fördergut 3 transportiert wird. Diese Förderebene 21 ist dabei in einem bestimmten Abstand über einer Aufstandsebene 22 bzw. einem Bodenniveau festgelegt. Die Förderebene 21 liegt vorzugsweise in etwa in Hüfthöhe über einem Bodenniveau bzw. über der Aufstandsebene 22 des Fördersystems 2 bzw. der Übergabeeinrichtung 1. Das Höhenniveau dieser Förderebene 21 kann beispielsweise durch ein Unter- bzw. Traggestell 23 für die Komponenten der Übergabeeinrichtung 1 definiert bzw. festgelegt sein. Alternativ ist es auch möglich, dass die erfindungsgemäße Übergabeeinrichtung 1 keinerlei Unter- bzw. Traggestell 23 aufweist, mit welchem die Übergabeeinrichtung 1 auf der Aufstandsebene 22 abgestützt wird, sondern die relevanten Funktionskomponenten der Übergabeeinrichtung 1 an zumindest einer der zu- bzw. nachgeordneten Fördervorrichtungen 4 bis 6 freitragend zu montieren bzw. aufzuhängen.

Die durch die Förderorgane 7, 8 bzw. 12, 13 definierte Förderebene 21 für das Fördergut 3 ist vorzugsweise fixiert bzw. vorgegeben, d.h. während des Betriebs der Übergabeeinrichtung 1 bzw. des Fördersystems 2 unveränderlich. Im dargestellten Ausführungsbeispiel sind die Förderorgane 12, 13 durch das rahmenartige Unter- bzw. Traggestell 23 in ihrem Höhenniveau relativ zur Aufstandsebene 22 festgelegt.

An die Übergabeeinrichtung 1 schließt wenigstens eine, quer zur ersten Fördervorrichtung 4; 11 verlaufende, weitere Fördervorrichtung 5, 6 an. Wie in strichlierten Linien dargestellt, ist es gegebenenfalls auch möglich, dass eine geradlinig zur ersten Fördervorrichtung 4; 11 weiterführende und an die Fördervorrichtung 4; 11 anbindende, zusätzliche Fördervorrichtung 24 ausgebildet ist. Ebenso ist es denkbar, dass die Fördervorrichtung 11 sowohl die vorgeordnete Fördervorrichtung 4 als auch die nachgeordnete Fördervorrichtung 24 ausbildet.

Die Übergabeeinrichtung 1 bzw. das sogenannte Knotenmodul ermöglicht es, das Fördergut 3 ungehindert bzw. unblockiert von der ersten Fördervorrichtung 4; 11 auf wenigstens eine dazu quer oder winkelig verlaufende, weitere Fördervorrichtung 5 oder 6 zu übergeben. Somit lassen sich mit Hilfe der Übergabeeinrichtung 1 bzw. des sogenannten Knotenmoduls L-, U-, Z- oder X-förmige Förderspuren bzw. Fördersysteme 2 aufbauen.

Die Förderrichtung der weiteren Fördervorrichtung 5; 6 verläuft üblicherweise rechtwinkelig zur Förderrichtung - Pfeil 9 - der ersten Fördervorrichtung 4; 11. Alternativ ist es auch möglich, in einem Winkel von weniger als 90° zueinander verlaufende Förderspuren vorzusehen, indem die Übergabeeinrichtung 1 an diese sogenannten spitz- bzw. stumpfwinkeligen Kreuzungs- bzw. Überschneidungswinkel der Fördervorrichtungen 4; 11 und 5; 6 konstruktiv angepasst wird.

Die Übergabeeinrichtung 1 umfasst eine quer zur Förderrichtung - gemäß Pfeil 9 - ausgerichtete bzw. fördernde Hub- und Fördervorrichtung 25, mit welcher eine Umsetzung von Fördergut 3 ausgehend von der Fördervorrichtung 4 bzw. 11 auf eine der Fördervorrichtungen 5, 6 bewerkstelligt wird. Sofern sichergestellt ist, dass ein Förderniveau der Fördervorrichtung 5 bzw. 6 zumindest geringfügig höher liegt, als die Förderebene 21 der Fördervorrichtung 4; 11, so ist via die Übergabeeinrichtung 1 auch ein Transfer von Fördergut 3 ausgehend von den Fördervorrichtungen 5 bzw. 6 auf die Fördervorrichtung 4; 11 bzw. 24 ermöglicht, indem die Höhenvariabilität bzw. Absenkbarkeit der Hub- und Fördervorrichtung 25 genutzt wird.

Die Hub- und Fördervorrichtung 25 stellt einen sogenannten Hub- und Fördertisch dar, dessen in strichlierten Linien veranschaulichte Förderebene 26 höhenvariabel ist. Vorzugsweise ist eine baulich kombinierte Hub- und Fördervorrichtung 25 vorgesehen, d.h. dass die Förderorgane 27, 28 der Hub- und Fördervorrichtung 25 auf einem gemeinsamen, höhenveränderlichen Tragrahmen 29 gelagert sind. Dieser Tragrahmen 29 für die Förderorgane 27, 28 ist gegenüber dem Unter- bzw. Traggestell 23 bzw. gegenüber der Förderebene 21 der Fördervorrichtung 4; 11 bedarfsweise anhebbar und absenkbar, wodurch die Hub- bzw. Absenkfunktion der Hub- und Fördervorrichtung 25 geschaffen ist. Via diese Hub- und Förderfunktion der Hub- und Fördervorrichtung 25 ist es ermöglicht, das Fördergut 3 unblockiert bzw. ungehindert von der ersten Fördervorrichtung 4; 11 an eine der weiteren, querverlaufenden Fördervorrichtungen 5; 6 zu übergeben. Vor allem kann dann, wenn die Hub- und Fördervorrichtung 25, insbesondere dessen Förderebene 26, zumindest geringfügig unter oder gegebenenfalls gleich zum Niveau der Förderebene 21 liegt, ein bestimmtes Fördergut 3 auf der Fördervorrichtung 4 bzw. 11 von der Übergabeeinrichtung 1 übernommen werden. Insbesondere kann dann, wenn die Förderebene 26 der Hub- und Fördervorrichtung 25 auf gleichem Niveau zur Förderebene 21, vorzugsweise zumindest geringfügig unter der Förderebene 21 liegt, das Fördergut 3 von der Fördervorrichtung 4 bzw. 11 auf bzw. über die Hub- und Fördervorrichtung 25 bewegt bzw. transportiert werden. Befindet sich sodann ein umzusetzendes Fördergut 3 oberhalb der Hub- und Fördervorrichtung 25 bzw. liegt das Fördergut 3 auf der Förderebene 26 auf, so kann anschließend zumindest die Hubfunktion der Hub- und Fördervorrichtung 25 aktiviert werden und das Fördergut 3 bevorzugt über die Förderebene 21 der Fördervorrichtung 4; 11 angehoben werden. Unter anderem in Abhängigkeit des Fördergutes 3 bzw. der Fördervorrichtung 4; 11 und/oder der Fördervorrichtung 5, 6 kann es auch ausreichend sein, die Förderebene 26 der Hub- und Fördervorrichtung 25 in etwa auf gleiches Niveau zur Förderebene 21 der Fördervorrichtung 4; 11 anzuheben, um einen Transfer des Fördergutes 3 ausgehend von der Hub- und Fördervorrichtung 25, über die Fördervorrichtung 4; 11 hinweg bis zur Fördervorrichtung 5 oder 6 zu ermöglichen. Die Förderebene 26 der Hub- und Fördervorrichtung 25 ist dabei zumindest soweit anzuheben, dass das Fördergut 3 an Teilen der Fördervorrichtung 4; 11 bzw. der Fördervorrichtung 5 oder 6 nicht derart auflaufen kann, dass der Weitertransport in diesem Kreuzungsbereich der einzelnen Förderspuren blockiert wäre. Entsprechendes würde bei einer Übergabe von Fördergut 3 ausgehend von der Fördervorrichtung 5 oder 6 auf die Fördervorrichtung 4; 11 oder 24 gelten.

Vorzugsweise sind die Förderorgane 27, 28 der Hub- und Fördervorrichtung 25 durch wenigstens zwei, insbesondere durch eine Mehrzahl von Förderrollen 30, 31 gebildet. Diese Förderrollen 30, 31 definieren die Förderebene 21 und bilden einen sogenannten Rollengang an der Hub- und Fördervorrichtung 25 aus. Drehachsen 32, 33 dieser Förderrollen 30, 31 verlaufen dabei parallel zur Förderrichtung - entsprechend Pfeil 9 - der ersten Fördervorrichtung 4; 11. Bezugnehmend auf die Fördervorrichtung 5, 6 verlaufen diese Drehachsen 32, 33 der parallel aneinandergereihten Förderrollen 30, 31 quer zur Förderrichtung - gemäß Pfeil 34 - der Fördervorrichtung 5 bzw. 6. Vorzugsweise ist also die Hub- und Fördervorrichtung 25 durch einen sogenannten Rollenhubtisch bzw. einen höhenvariablen Rollengang gebildet. Alternativ ist es auch denkbar, die Förderorgane 27, 28 der Hub- und Fördervorrichtung 25 durch einen zumindest zweispurigen Riemen- oder Kettenförderer oder durch einen relativ breiten Bandförderer mit endlos umlaufendem Förderband zu bilden.

Weiters umfasst die erfindungsgemäße Übergabeeinrichtung 1 eine anheb- und absenkbare Bremsvorrichtung 35 für zu transportierendes bzw. für in andere Förderrichtungen umzusetzendes Fördergut 3. Mittels dieser Bremsvorrichtung 35 kann ein in Richtung zur Übergabeeinrichtung 1 transportiertes Fördergut 3 zumindest abgebremst bzw. verzögert werden. Insbesondere ist es mittels dieser Bremsvorrichtung 35 bei Bedarf ermöglicht, ein auf der Fördervorrichtung 4; 11 mit bestimmter, vordefinierter Geschwindigkeit transportiertes Fördergut 3 innerhalb eines bestimmten Verzögerungsweges an der Übergabeeinrichtung 1 abzubremsen oder gegebenenfalls via die Bremsvorrichtung 35 an der Übergabeeinrichtung 1 bzw. oberhalb der Hub- und Fördervorrichtung 25 zum Stillstand zu bringen. Wesentlich ist dabei, dass die Fördergeschwindigkeit der Fördervorrichtung 4; 11 unverändert beibehalten werden kann und nicht gestoppt bzw. verzögert werden muss, so dass andere, auf der Fördervorrichtung 4; 11 transportierte Fördergüter 3 nicht angehalten werden müssen. Insbesondere kann die Fördervorrichtung 4; 11 mit vordefinierter, kontinuierlicher Geschwindigkeit weiterbetrieben werden und ist es mittels der bedarfsweise aktivierbaren Bremsvorrichtung 35 ermöglicht, ein bestimmtes Fördergut 3 im Bereich der Übergabeeinrichtung 1 bzw. im Bereich der Förderebene 26 gezielt abzubremsen bzw. zu stoppen. Hierfür ist die Bremsvorrichtung 35 wahlweise aktivier- und deaktivierbar, indem die Bremsvorrichtung 35 bedarfsweise über und bevorzugt geringfügig unter die Förderebene 21 oder auf gleiches Niveau zur Förderebene 21 abgesenkt bzw. angehoben wird. In der aktiven Stellung der Bremsvorrichtung 35 ragt diese bzw. zumindest deren Bremsmittel wenigstens geringfügig über die Förderebene 21 der Fördervorrichtung 4; 11 um in reibschlüssigen Kontakt mit einer Unterseite 36 eines herangeförderten Fördergutes 3 zu gelangen. Ist die Bremsvorrichtung 35 bzw. deren wenigstens eines die Bremswirkung erzielendes Bremsorgan 37, 38 unter dem Niveau der Förderebene 21 bzw. in etwa auf gleichem Niveau zur Förderebene 21 platziert, so ist diese Bremsvorrichtung 35 inaktiv, nachdem dessen Bremsorgan 37, 38 gar nicht oder nur minimal bzw. vernachlässigbar gering mit der Unterseite 36 eines im Bereich der Übergabeeinrichtung 1 transportierten Fördergutes 3 in Kontakt steht.

Die Bremsorgane 37, 38 der wahlweise aktivier- und deaktivierbaren Bremsvorrichtung 35 sind vorzugsweise durch länglich ausgebildete Bremsorgane 37, 38, insbesondere durch wenigstens eine, vorzugsweise durch zumindest zwei Bremsleiste(n) 39, 40 gebildet. Diese leistenförmigen Bremsorgane 37, 38 sind im Wesentlichen parallel zur Förderrichtung - gemäß Pfeil 9 - der ersten Fördervorrichtung 4; 11 ausgerichtet und erstrecken sich je nach erforderlicher Verzögerungskurve bzw. Bremsleistung und/oder zu erzielender Abbremscharakteristik vorzugsweise in etwa über eine Breite 41 der Hub- und Fördervorrichtung 25. Eine Länge 42 der Bremsleisten 39, 40 entspricht somit in etwa der Breite der Förderebene 26 der Hub- und Fördervorrichtung 25. Dadurch wird sichergestellt, dass ein auf die Bremsorgane 37, 38 bzw. auf die Bremsleisten 39, 40 auflaufendes Fördergut 3 von der Bremsvorrichtung 35 sicher bzw. stabil und kippfrei übernommen und an die Hub- und Fördervorrichtung 25, insbesondere an dessen Förderorgane 27, 28, lasttragend übergeben werden kann. Vorzugsweise beträgt eine Länge 42 der Bremsleisten 39, 40 das 0,7- bis 1,3-fache einer Breite 41 der Hub- und Fördervorrichtung 25 bzw. deren Förderebene 26.

Die Bremsleisten 39, 40 sind bevorzugt austauschbar an den tafel- bzw. stößelartigen Bremsorganen 37, 38 befestigt. Beispielsweise kann eine Schraubverbindung zwischen den Bremsleisten 39, 40 und den Bremsorganen 37, 38 vorgesehen sein. Durch die einfache Austausch- bzw. Wechselbarkeit der Bremsleisten 39, 40 kann die Bremsleistung bzw. Bremscharakteristik der Bremsvorrichtung 35 in einfacher Art und Weise an die jeweiligen Bedingungen bzw. Erfordernisse angepasst werden. Insbesondere kann in Abhängigkeit des Werkstoffes der Bremsleisten 39, 40 der Reibungskoeffizient der Bremsflächen verändert bzw. an die jeweiligen Verhältnisse angepasst werden. Die Werkstoffe bzw. Bremswirkungen der Bremsleisten 39, 40 sind beispielsweise in Abhängigkeit der Beschaffenheit bzw. der Reibungskoeffizienten der Unterseite 36 des jeweiligen Fördergutes 3 abzustimmen. Durch die einfache Demontierbarkeit und Montierbarkeit der Bremsleisten 39, 40 auf der Bremsvorrichtung 35 mittels aus dem Stand der Technik bekannter Kupplungsvorrichtungen bzw. Schraubverbindungen ist auch ein Tausch von gegebenenfalls verschlissenen Bremsleisten 39, 40 kurzfristig und in einfacher Art und Weise ermöglicht. Die Anpassung der Bremswirkung ist also z.B. durch einfache Auswahl des Werkstoffes der Bremsleisten 39, 40 bzw. der Bremsbeläge ermöglicht.

Vorzugsweise sind wenigstens zwei quer zu ihrer Bremswirkrichtung zueinander beabstandete Bremsorgane 37, 38 bzw. Bremsleisten 39, 40 ausgebildet. Ein quer zur Förderrichtung der Fördervorrichtung 4; 11 - Pfeil 9 - gemessener Abstand 43 zwischen den (äußersten) Bremsleisten 39, 40 entspricht in etwa einer Förderlänge der Hub- und Fördervorrichtung 25 bzw. einer Spurweite einer als Zweispurförderer ausgebildeten Fördervorrichtung 4; 11. Der Abstand 43 zwischen zwei Bremsleisten 39, 40 soll auch derart bemessen sein, dass ein umzusetzendes, d.h. an der Übergabeeinrichtung 1 rechtwinkelig weiter zu transportierendes Fördergut 3 von den Bremsleisten 39, 40 stabil bzw. kippsicher aufgenommen und dessen Unterseite 36 zuverlässig über die Förderebene 21 der Fördervorrichtung 4; 11 angehoben werden kann.

Um die Bremsvorrichtung 35 bzw. zumindest deren Bremsorgane 37, 38 wahlweise über und vorzugsweise zumindest geringfügig unter die Förderebene 21 anheben bzw. absenken zu können, ist an der Übergabeeinrichtung 1 eine erste Stellvorrichtung 44 ausgebildet. Weiters ist an der Übergabeeinrichtung 1 zur Anhebung und Absenkung der Hub- und Fördervorrichtung 25 bzw. zur Umsetzung der Anhebe- und Absenkfunktion der Hub- und Fördervorrichtung 25 eine zweite Stellvorrichtung 45 ausgebildet. Diese Stellvorrichtungen 44 bzw. 45 bewirken also, dass die Bremsvorrichtung 35 bzw. die Hub- und Fördervorrichtung 25 bei Bedarf vorzugsweise bis unter und über die Förderebene 21 bewegt bzw. verstellt werden können.

Wesentlich ist dabei, dass die erste Stellvorrichtung 44 und die zweite Stellvorrichtung 45 mechanisch bewegungsgekoppelt sind, so dass bei einer Aktivierung bzw. Verstellung der ersten Stellvorrichtung 44 auch die zweite Stellvorrichtung 45 zwangsweise mitbewegt bzw. verstellt wird. Diese Bewegungskopplung zwischen der ersten Stellvorrichtung 44 und der zweiten Stellvorrichtung 45 kann dabei fix bzw. unveränderlich vorgeben oder aber auch einstellbar ausgeführt sein. Vor allem bei einer einstellbaren Bewegungskopplung zwischen der ersten und der zweiten Stellvorrichtung 44 und 45 kann die Bewegungscharakteristik der ersten Stellvorrichtung 44 im Vergleich zur zweiten Stellvorrichtung 45 bei Bedarf verändert bzw. an geänderte Bedingungen angepasst werden.

Wesentlich ist dabei, dass die miteinander bewegungsgekoppelte erste Stellvorrichtung 44 für die Bremsvorrichtung 35 und zweite Stellvorrichtung 45 für die Hub- und Fördervorrichtung 25 mit lediglich einer gemeinsamen, ersten Antriebsvorrichtung 46 bewegungsverbunden sind. D.h., dass die von dieser ersten Antriebsvorrichtung 46 bereitgestellte Antriebs- bzw. Bewegungsenergie sowohl auf die erste Stellvorrichtung 44 als auch auf die zweite Stellvorrichtung 45 einwirkt und somit sowohl die Aktivierung bzw. Deaktivierung der Bremsvorrichtung 35, als auch die Anhebung bzw. Absenkung der Hub- und Fördervorrichtung 25 ausgehend von lediglich einer gemeinsamen Antriebsquelle bzw. Antriebsvorrichtung 46 erfolgt. Durch die vorzugsweise rein mechanische Bewegungskopplung zwischen der ersten Stellvorrichtung 44 und der zweiten Stellvorrichtung 45 ergibt sich eine gleichzeitige bzw. synchrone Bewegung der Bremsvorrichtung 35 und der Hub- und Fördervorrichtung 25 hinsichtlich deren Anheb- bzw. Absenkbewegungen.

Insbesondere bewegt sich sowohl die Bremsvorrichtung 35 in Vertikalrichtung zur Förderebene 21 als auch die Hub- und Fördervorrichtung 25 in Vertikalrichtung zur Förderebene 21, sobald die Antriebsvorrichtung 46 in Gang gesetzt bzw. aktiviert wird. In jenem Augenblick, in welchem die erste Antriebsvorrichtung 46 gestoppt ist, wird gleichzeitig die Vertikalbewegung der Bremsvorrichtung 35 als auch die Vertikalbewegung der Hub- und Fördervorrichtung 25, insbesondere des Hubtisches, beendet.

Die Antriebsvorrichtung 46 kann dabei durch einen elektrischen, hydraulischen oder pneumatischen Linear- oder Rotationsantrieb gebildet sein. So ist es z.B. möglich, die Antriebsvorrichtung 46 durch eine hydraulische oder pneumatische Kolben-/Zylinderanordnung oder durch einen elektromagnetischen Linearmotor bzw. einem sonstigen Aktor zu bilden.

Vorzugsweise ist die Antriebsvorrichtung 46 durch einen elektrisch ansteuerbaren Getriebemotor 47 gebildet, welcher mit der ersten Stellvorrichtung 44 und der zweiten Stellvorrichtung 45 in Antriebs- bzw. Bewegungsverbindung steht. Diese Antriebsvorrichtung 46 bzw. der dementsprechende Getriebemotor 47 ist vorzugsweise direkt an der Übergabeeinrichtung 1, insbesondere an dessen Unter- bzw. Traggestell 23 montiert. Die Bewegungskopplung zwischen der ersten Stellvorrichtung 44 und der zweiten Stellvorrichtung 45 ist vorzugsweise rein mechanisch ausgeführt, beispielsweise mittels Hebelanordnungen, Mitnehmeranordnungen, Zahnradanordnungen oder dgl. ausgeführt. Die Stellvorrichtungen 44, 45 selbst sind vorzugsweise in Art von Kurbelhubtrieben gebildet, welche zwischen die Antriebsvorrichtung 46 und die Bremsvorrichtung 35 bzw. die Hub- und Fördervorrichtung 25 geschaltet sind, wie dies im Nachfolgenden noch näher erläutert werden wird.

Ein Elektromotor 48 der Antriebsvorrichtung 46 ist mit einer nicht dargestellten Steuervorrichtung leitungsverbunden und wird von dieser entsprechend angesteuert, d.h. zumindest und in und außer Betrieb gesetzt. Vorzugsweise wird diese Antriebsvorrichtung 46 ausschließlich unidirektional betrieben bzw. ist es lediglich erforderlich, den Elektromotor 48 in einer Drehrichtung zu betreiben. Dadurch ergeben sich wesentliche, steuerungstechnische Vereinfachungen, da beispielsweise keinerlei Komponenten bzw. Vorkehrungen für eine Drehrichtungsumkehr der Antriebsvorrichtung 46 bzw. des Elektromotors 48 erforderlich sind.

Gegebenenfalls umfasst diese erste Antriebsvorrichtung 46 eine bedarfsweise aktivierbare bzw. sich selbsttätig aktivierende Einbremsvorrichtung 49 für die Stellvorrichtungen 44, 45 der Bremsvorrichtung 35 bzw. der Hub- und Fördervorrichtung 25. Dadurch wird verhindert, dass eine aktivierte Bremsvorrichtung 35 bzw. angehobene Hub- und Fördervorrichtung 25 unter Last, beispielsweise durch das Fördergut 3, nach der Deaktivierung der Antriebsleistung der Antriebsvorrichtung 46 absinkt. Diese Einbremsvorrichtung 49 kann beispielsweise durch eine selbsthemmende Getriebeanordnung 50, einem Bremsmotor, eine sogenannte Federspeicherbremse oder dgl. gebildet sein. Sobald diese Einbremsvorrichtung 49 aktiviert ist, wird verhindert, dass bei inaktiver Antriebsvorrichtung 46 bzw. bei deaktiviertem Elektromotor 48 eine Verstellung der Stellvorrichtungen 44, 45 bzw. der Bremsvorrichtung 35 und der Hub- und Fördervorrichtung 25 in Vertikalrichtung zur Förderebene 21 erfolgt. Somit kann eine via die Bremsvorrichtung 35 bzw. deren Bremsleisten 39, 40 angehobene Last, d.h. ein angehobenes Fördergut 3, und/oder ein via die Hub- und Fördervorrichtung 25 angehobenes Fördergut 3 in dieser angehobenen Position bzw. Stellung auch dann gesichert verbleiben, wenn der Antrieb für die Stellvorrichtungen 44, 45 auf einem beliebigen Niveau oberhalb der Förderebene 21 abgeschaltet wird.

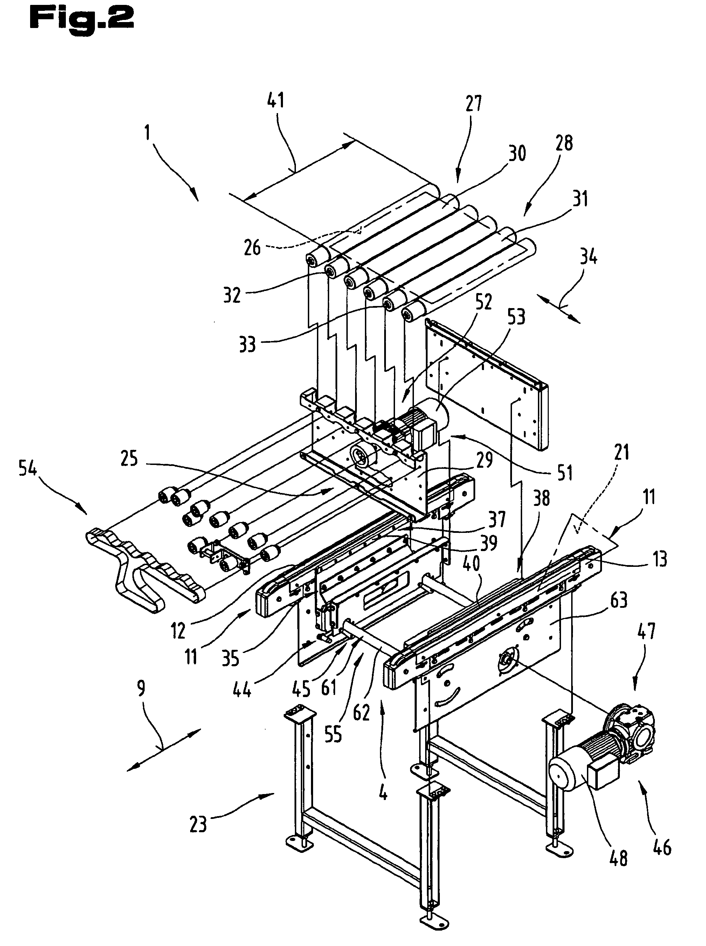

Wie am besten aus Fig. 2 ersichtlich ist, ist an der Übergabeeinrichtung 1 eine weitere Antriebsvorrichtung 51 für die Förder- bzw. Transportfunktion der Hub- und Fördervorrichtung 25 vorgesehen. Diese Antriebsvorrichtung 51 ist vorzugsweise an einem Teil des vertikalbeweglichen Tragrahmens 29 der Hub- und Fördervorrichtung 25 montiert bzw. befestigt. Insbesondere ist diese Antriebsvorrichtung 51 mit jenem Tragrahmen 29 verbunden, welcher auch die Förderorgane 27, 28, insbesondere die Förderrollen 30, 31 der Hub- und Fördervorrichtung 25 trägt. Diese Antriebsvorrichtung 51, welche vorzugsweise durch einen Getriebemotor 52 umfassend einen Elektromotor 53 und ein mechanisches Getriebe gebildet ist, ist vorzugsweise via einen Ketten- oder Riementrieb 54 mit einer Mehrzahl von Förderrollen 30, 31 bewegungsverbunden. Alternativ wäre auch eine zahnradgetriebene Kopplung zwischen der Antriebsvorrichtung 51 und zumindest mehreren, vorzugsweise sämtlichen Förderrollen 30, 31 der Hub- und Fördervorrichtung 25 denkbar. Eine derartige Ausbildung ist jedoch mit vergleichsweise höheren Kosten und geringeren Toleranzen verbunden.

Die Antriebsvorrichtung 51 ist mit einer nicht dargestellten, elektrischen Steuervorrichtung verbunden und von dieser derart angesteuert, dass zumindest eine unidirektionale Antriebsbewegung erzielt wird. Soll diese Hub- und Fördervorrichtung 25 das Fördergut 3 in zueinander entgegengesetzten Förderrichtungen - gemäß Pfeil 34 - transportieren können, so ist die Antriebsvorrichtung 51 von der Steuervorrichtung umkehrbar ansteuerbar, sodass Antriebsbewegungen in zueinander entgegengesetzten Richtungen wahlweise erzielbar sind.

Die Stellvorrichtungen 44, 45 sind im wesentlichen durch einen sogenannten Kurbeltrieb 55 gebildet, mit welchem eine Umsetzung einer von der Antriebsvorrichtung 46 bereitgestellten, vorzugsweise unidirektionalen und rotatorischen Antriebsbewegung in eine bidirektionale Linearbewegung bzw. in eine bidirektionale Vertikalbewegung zur Anhebung und Absenkung der Bremsvorrichtung 35 und der Hub- und Fördervorrichtung 25 bewerkstelligt wird. Dieser Kurbeltrieb 55 umfasst wenigstens einen drehbar gelagerten bzw. via die Antriebsvorrichtung 46 verschwenkbaren Stellarm 56, 57. Insbesondere ist ein um eine Schwenkachse 58 verdrehbar gelagerter Stellarm 56 ausgebildet, dessen von der Schwenkachse 58 distanziertes Ende 59 mit der Bremsvorrichtung 35 bewegungsverbunden ist bzw. auf die Bremsvorrichtung 35 verstellend einwirkt. Vorzugsweise ist eine Verbindung zwischen einem zur Schwenkachse 58 radial distanzierten Ende 59 des Stellarmes 56 mit der Bremsvorrichtung 35 durch eine Gelenksverbindung 60 gebildet. D.h., dass der wenigstens eine Stellarm 56 für die Bremsvorrichtung 35 mit der Bremsvorrichtung 35 bzw. dessen Bremsorgan 37, 38 zwingend bewegungsgekoppelt ist. Bei einer Verschwenkung des Stellarmes 56 wird somit die Bremsvorrichtung 35 - getrieben durch den sich um die Schwenkachse 58 verdrehenden Stellarm 56 - zwingend angehoben bzw. zwingend abgesenkt. Gleichzeitig stellt sich eine vergleichsweise geringe Verstellung der Bremsvorrichtung 35 - insbesondere deren Bremsorgane 37, 38 bzw. Bremsleisten 39, 40 - in bzw. entgegen der Förderrichtung - gemäß Pfeil 9 - der Fördervorrichtung 4; 11 ein.

In ähnlicher Weise ist die Stellvorrichtung 45 für die Anhebung bzw. Absenkung der Hub-und Fördervorrichtung 25 durch wenigstens einen weiteren, bevorzugt eigenständig ausgebildeten Stellarm 57 geschaffen. Dieser weitere Stellarm 57 für die Hub- und Fördervorrichtung 25 ist vorzugsweise um die gleiche bzw. selbe Schwenkachse 58 verschwenkbar gelagert, wie der Stellarm 56 für die Bremsvorrichtung 35. Vorzugsweise ist also eine gemeinsame Schwenklagerung 61 für den Stellarm 56 und den Stellarm 57 ausgebildet. Diese Schwenklagerung 61 umfasst eine Trägerwelle 62, auf der die Stellarme 56, 57 befestigt sind. Diese Trägerwelle 62 definiert die Schwenkachse 58 und ist an einem Grundrahmen 63 bzw. am Unter- bzw. Traggestell 23 der Übergabeeinrichtung 1 ortsfest, jedoch um deren Längsachse drehbeweglich gelagert. Die Trägerwelle 62 bzw. deren Schwenkachse 58 verläuft dabei quer zur Förderrichtung - Pfeil 9 - der Fördervorrichtung 4; 11 und im wesentlichen parallel zur Förderebene 21.

Ein von der Schwenkachse 58 distanziertes Ende 64 des Stellarmes 57 ist mit der Hub- und Fördervorrichtung 25, insbesondere mit dessen Tragrahmen 29 bewegungsgekoppelt bzw. wirkungsverbunden. Vorzugsweise ist das Ende 64 des Stellarmes 57 via eine Gelenksverbindung 65 mit dem Tragrahmen 29 der Hub- und Fördervorrichtung bewegungsgekoppelt. Dadurch wird eine zwingende Bewegungskopplung erzielt, d.h., dass bei einer Verschwenkung des Stellarmes 57 der Tragrahmen 29 in Vertikalrichtung zur Förderebene 21 zwangsweise angehoben bzw. abgesenkt wird. Gleichzeitig führt der Tragrahmen 29 bzw. die Hub-und Fördervorrichtung 25 eine im Vergleich zur Vertikalbewegung geringere Horizontalbewegung parallel zur Förderrichtung - gemäß Pfeil 9 - der Fördervorrichtung 4; 11 aus.

Angetrieben von der Antriebsvorrichtung 46 können sich die beiden Stellarme 56, 57 also in einer vertikal zur Förderebene 21 und in Richtung der Förderrichtung - gemäß Pfeil 9 - verlaufenden Verschwenkebene 66 verschwenken. Die Stellarme 56 und 57 auf der Trägerwelle 62 sind dabei bezugnehmend auf die Verschwenkebene 66 in einem definierten Winkel 67 zueinander versetzt angeordnet bzw. bei Bezugnahme auf die Schwenkachse 58 der Trägerwelle 62 um einen bestimmten Drehwinkel zueinander beabstandet. Eine aktive bzw. wirkungsrelevante Länge 68 des Stellarmes 56 ist dabei unterschiedlich zu einer Länge 69 des Stellarmes 57. Vorzugsweise ist die Länge 68 des Stellarmes 56 für die Bremsvorrichtung 35 größer bemessen, als eine Länge 69 des Stellarmes 57 für die Hub- und Fördervorrichtung 25, insbesondere für deren Hubwerk bzw. Tragrahmen 29.

Die beiden in einem bestimmten Winkelabstand innerhalb der Verschwenkebene 66 zueinander versetzten Stellarme 56, 57 sind dabei bevorzugt fix bzw. starr mit der Trägerwelle 62 verbunden. Alternativ ist es auch denkbar, die Verbindung zwischen wenigstens zumindest einem Stellarm 56, 57 und der Trägerwelle 62 bedarfsweise einstellbar bzw. kuppelbar auszuführen.

Via die Gelenksverbindung 60 ist also der Stellarm 56 mit der Bremsvorrichtung 35, insbesondere mit wenigstens einer der Bremsleisten 39, 40 drehbeweglich gekoppelt. Via die weitere Gelenksverbindung 65 ist der weitere Stellarm 57 mit dem Tragrahmen 29 der Hub- und Fördervorrichtung 25 drehbeweglich verbunden und bildet somit das Hubwerk der Übergabeeinrichtung 1 aus.

Die Trägerwelle 58 weist weiters wenigstens einen radial zu ihrer Schwenkachse 58 abstehenden Antriebsarm 70 auf. Mittels diesem Antriebsarm 70 wird die Antriebsenergie der Antriebsvorrichtung 46 auf die Trägerwelle 62 übertragen bzw. an die Stellarme 56, 57 weitergeleitet. Alternativ ist es selbstverständlich auch möglich, einen der Stellarme 56 oder 57 gleichzeitig als Antriebsarm 70 zu nutzen, indem einer der Stellarme 56, 57 zudem mit der Antriebsvorrichtung 46 bewegungsgekoppelt wird.

Vorzugsweise ist dieser Antriebsarm 70 bezugnehmend auf die Trägerwelle 62 diametral gegenüberliegend zu einem der Stellarme 56, 57 angeordnet.

Die Stellvorrichtungen 44, 45 sind somit durch wenigstens einen mehrarmigen, drehbar gelagerten Schwinghebel 71 gebildet. Dieser Schwinghebel 71 ist dabei zumindest zweiarmig ausgebildet, indem er wenigstens die Stellarme 56 und 57 umfasst. Vorzugsweise ist dieser um die Schwenkachse 58 verdrehbare Schwinghebel 71 jedoch dreiarmig ausgebildet und weist dabei die zwei innerhalb der Verschwenkebene 66 zueinander versetzten Stellarme 56 und 57 sowie einen radial zur Schwenkachse 58 abstehenden Antriebsarm 70 auf. Anstelle der Ausbildung eines eigenständigen Antriebsarmes 70 auf der Trägerwelle 62 kann dieser Antriebsarm 70 auch durch eine Verlängerung eines der Stellarme 56, 57 realisiert sein. Scheibenförmige Elemente auf der Trägerwelle 62 sind dabei gleichwirkend zu von der Trägerwelle 62 vorkragenden bzw. abstehenden Stellarmen 56, 57 bzw. Antriebsarmen 70.

Die Stellvorrichtungen 44, 45 sind, insbesondere der mehrarmige Schwinghebel 71 ist vorzugsweise mittels einem Pleueltrieb 72 mit der ersten Antriebsvorrichtung 46 bewegungsgekoppelt. Insbesondere ist eine Koppelstange 73 ausgebildet, die den Schwinghebel 71, insbesondere dessen Antriebsarm 70, mit der Antriebsvorrichtung 46 verbindet. Vorzugsweise ist der Antriebsarm 70 mit dem Pleueltrieb 72, insbesondere mit dessen Koppelstange 73, via eine Gelenksverbindung 74 bewegungsgekoppelt. Die Antriebsvorrichtung 46, insbesondere der Getriebemotor 47, umfasst eine Kurbelscheibe 75 oder einen dem gemäßen Kurbelarm, welche via eine weitere Gelenksverbindung 76 mit dem distalen bzw. weiteren Ende der Koppelstange 73 gelenkig verbunden ist. Insbesondere die Kurbelscheibe 75 mit der Gelenksverbindung 76 zur Koppelstange 73 bildet den sogenannten Pleueltrieb 72 aus. Das von der Kurbelscheibe 75 bzw. dem dem gemäßen Kurbelarm entfernte Ende der Koppelstange kann anstelle der dargestellten Gelenksverbindung 74 auch durch ein Gelenk in einer Langlochführung gebildet sein, um das Ende der Koppelstange 73 linear anstelle bogenförmig zu bewegen.

Die vorhergehend beschriebene Ausführung kann auch als Schubkurbellösung bzw. als Antrieb nach dem Hubwellenprinzip bezeichnet werden.

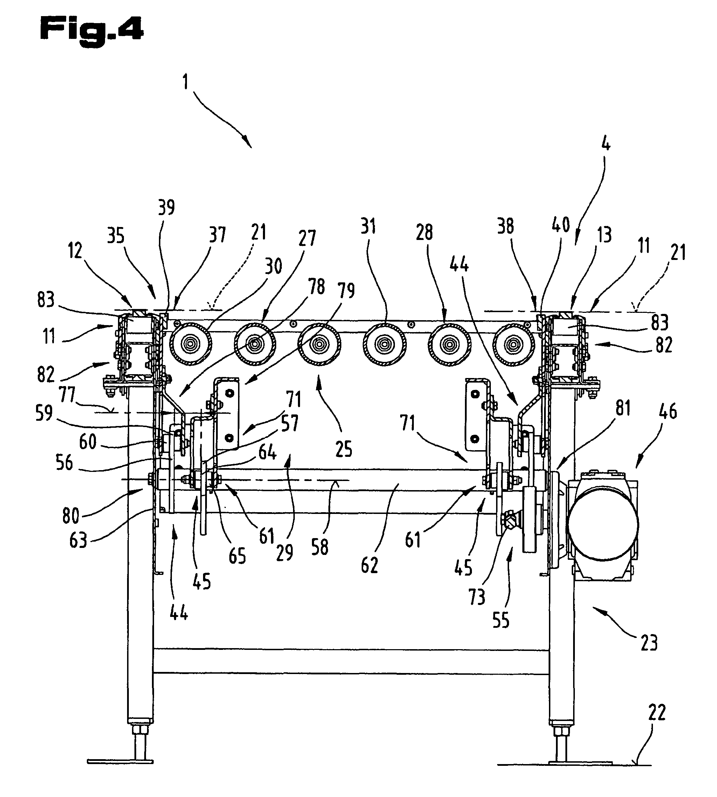

Wie am besten aus Fig. 4 ersichtlich ist, sind die Stellarme 56,57 in Längsrichtung der Schwenkachse 58 der Trägerwelle 62 in einem Abstand 77 zueinander angeordnet. Dadurch können großzügig dimensionierte Bewegungsübertragungsglieder 78, 79 zwischen den Stellarmen 56, 57 bzw. deren radial zur Schwenkachse 58 distanzierten Enden 59, 64 und der Bremsvorrichtung 35 bzw. der Hub- und Fördervorrichtung 25, insbesondere zu deren Tragrahmen 29, ausgebildet werden. Zudem kann ein relativ weitläufiger Verschwenkungswinkel für die Trägerwelle 62 erzielt werden, ohne dass dabei die Bewegungsübertragungsglieder 78, 79 einander blockieren können. Zudem können aufgrund des Abstandes 77 zwischen den Stellarmen 56, 57 die Gelenksverbindungen 60, 65 großzügig dimensioniert werden, wodurch eine langfristig wartungsfreie Verstellmechanik erzielbar ist.

Wie am besten aus einer Zusammenschau der Fig. 2 und 4 ersichtlich ist, sind jeweils zwei in Längsrichtung der Trägerwelle 62 zueinander beabstandete Stellvorrichtungen 44 und 45 für die Bremsvorrichtung 35 und die Hub- und Fördervorrichtung 25 ausgebildet. Vorzugsweise ist also in den stirnseitigen Endbereichen der Trägerwelle 62 jeweils eine Stellvorrichtung 44 und jeweils eine Stellvorrichtung 45 vorgesehen.

Gemäß einer bevorzugten Ausführungsform weist die Übergabeeinrichtung 1 eine zweifache bzw. doppelte Ausführung der Trägerwelle 62 mit den Stellvorrichtungen 44, 45 auf. Insbesondere sind zwei in Förderrichtung - Pfeil 9 - zueinander distanzierte und achsparallel ausgerichtete Trägerwellen 62 am Grundrahmen 63 oder am Unter- bzw. Traggestell 23 der Übergabeeinrichtung 1 gelagert. Jede Trägerwelle 62 weist dabei jeweils zwei Stellvorrichtungen 44 und jeweils zwei Stellvorrichtungen 45 auf. Dadurch ergibt sich in vorteilhafter Weise zumindest für die Hub- und Fördervorrichtung 25 eine sogenannte Vier-Punkt-Abstützung. Vorzugsweise wird aber auch die Bremsvorrichtung 35 via eine Vier-Punkt-Lagerung angehoben und abgesenkt. Insbesondere ist den stirnseitigen Endbereichen der tafel- bzw. leistenartigen Bremsorgane 37, 38 jeweils eine Stellvorrichtung 44 zugeordnet. Durch diese Vier- bzw. zumindest Zwei-Punkt-Lagerung der Hub- und Fördervorrichtung 25 bzw. der Bremsvorrichtung 35 ist auch bei relativ geringer Eigenstabilität der genannten Komponenten eine hohe Hubkraft bzw. Formstabilität erzielbar. In vorteilhafter Weise können somit bei relativ geringem Eigengewicht der Übergabeeinrichtung 1 relativ schwere Lasten bzw. Fördergüter 3 manipuliert werden, da die auftretenden Kräfte bzw. Momente besser verteilt werden und somit von der Bremsvorrichtung 35 und der Hub- und Fördervorrichtung 25 zuverlässig aufgenommen werden können. Darüber hinaus sind Verwindungen der einzelnen Komponenten, wie sie aufgrund einseitiger Belastungen bzw. bei punktuellen oder zentralen Belastungen immer wieder auftreten, minimiert.

In den distalen Stirnendbereichen ist die wenigstens eine Trägerwelle 62 mittels den Lagervorrichtungen 80, 81 drehbeweglich gelagert. Diese Lagervorrichtungen 80, 81 verbinden dabei den Grundrahmen 63 oder das Unter- bzw. Traggestell 23 mit den stirnseitigen Endbereichen der Trägerwelle 62 und definieren so die Schwenkachse 58 für die Stellvorrichtungen 44, 45 bzw. den dem gemäßen, zumindest zweiarmigen Schwinghebel 71. Via die Lagervorrichtungen 80, 81 und die dazwischen liegende Trägerwelle 62 wird auch die Distanz zwischen gegenüberliegenden Wandteilen des Grundrahmens 63 gesichert bzw. die Formsteifigkeit des Grundrahmens 63 erhöht.

Die Antriebsvorrichtung 46 ist vorzugsweise mit lediglich einer der beiden Trägerwellen 62 direkt gekoppelt. Die zur ersten Trägerwelle 62 in Förderrichtung - Pfeil 9 - distanzierte zweite Trägerwelle 62 mit den Stellvorrichtungen 44, 45 ist vorzugsweise nur via die Bremsorgane 37, 38 bzw. via den Tragrahmen 29 der Hub- und Fördervorrichtung 25 mit der ersten Trägerwelle 62 bewegungsgekoppelt. D.h., dass die Übertragung der Bewegungsenergie von der ersten Trägerwelle 62 auf die zweite Trägerwelle 62 ausschließlich via die tragenden Elemente bzw. Komponenten der Bremsvorrichtung 35 bzw. der Hub- und Fördervorrichtung 25 erfolgt. Vorzugsweise sind die erste und die zweite Trägerwelle 62 mit ihren jeweiligen Schwinghebeln 71 bzw. Stellarmen 56, 57 baugleich ausgebildet.

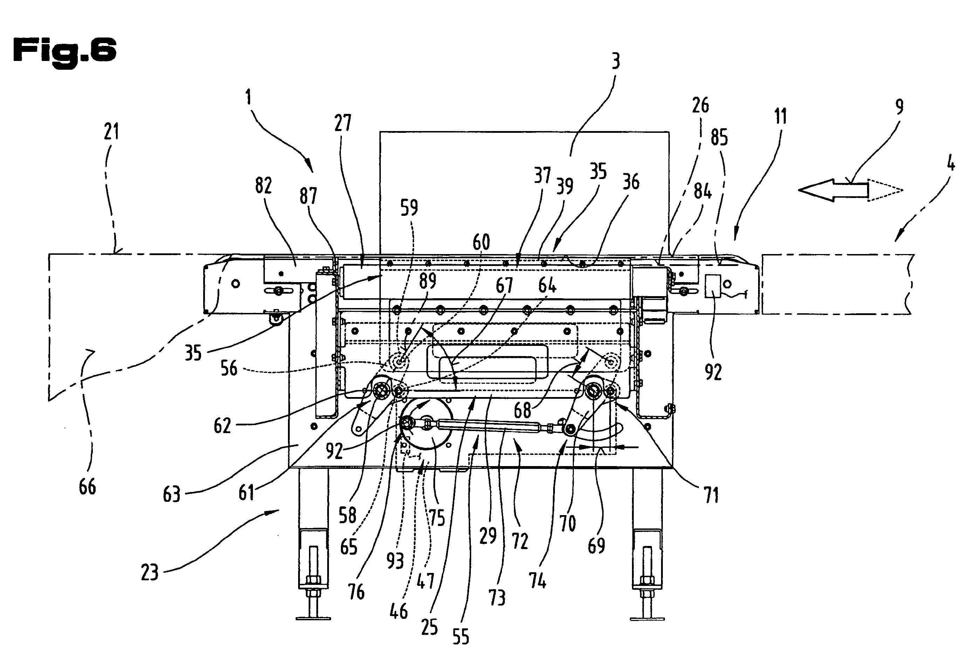

Insbesondere ist in der Übergabeeinrichtung 1 als Verstellmechanik eine Art doppeltes Parallelogrammhubwerk bzw. zweifache Parallelschwinge für die Bremsvorrichtung 35 und für die Hub- und Fördervorrichtung 25 ausgebildet, wie dies am besten aus Fig. 6 ersichtlich ist. Die Schwenkachsen 58 der beiden Trägerwellen 62 bilden dabei die unteren Eckpunkte zweier Parallelogramme und die Drehachsen der Gelenksverbindung 60 bzw. 65 bilden die oberen Eckpunkte dieser doppelten, mechanisch gekoppelten Parallelogramm-Kinematik.

Wie am besten aus Fig. 4 ersichtlich ist, besteht die Fördervorrichtung 11 bzw. eine sich durchgängig erstreckende Fördervorrichtung 4 bevorzugt aus einem zweispurigen Riemenförderer. Die parallel geführten Spuren dieses Riemenförderers bestehen im wesentlichen aus jeweils einem langgestreckten Trägerelement 82, welche in den stirnseitigen Endbereichen die Umlenkscheiben 16, 17 für das als Endlosschleife ausgebildete Förderorgan 12, 13 bzw. 7, 8 lagern. Innerhalb der Förderstrecke zwischen diesen Umlenkscheiben 16, 17 sind vorzugsweise mehrere zueinander distanziert angeordnete Stütztrollen 83 gelagert, auf welchen sich die Unterseite der riemenartigen Förderorgane 12, 13 abstützt. Die riemenartigen Förderorgane 12, 13 sind im Querschnitt vorzugsweise T-förmig ausgeführt, sodass sich eine verbesserte Führungsgenauigkeit bzw. Führungsstabilität für die Fördervorrichtung 4; 11 ergibt.

Anhand der Fig. 6 bis 8 werden im nachfolgenden jene Vorgänge und Abläufe auszugsweise erläutert, welche bei einer Umsetzung von stückhaftem Fördergut 3 von der Fördervorrichtung 4; 11 auf eine Querförderbahn auftreten.

Entsprechend der Darstellung in Fig. 6 befindet sich die Übergabeeinrichtung 1, insbesondere deren Bremsvorrichtung 35, in einer Ausgangs- bzw. Ruhestellung 84, in welcher sich die wirksame Fläche, d.h. die Brems- bzw. Reibungsfläche der Bremsorgane 37, 38, vorzugsweise zumindest geringfügig unterhalb der Förderebene 21 befindet. Ebenso liegt die Förderebene 26 der Hub- und Fördervorrichtung 25 bevorzugt zumindest geringfügig unterhalb der Förderebene 21 der Fördervorrichtung 4; 11. Bei Fördergütern 3 mit unebener bzw. abgestufter Unterseite 36 ist es auch denkbar, dass die Bremsflächen der Bremsvorrichtung 35 bzw. die Abstütz- bzw. Transportflächen der Hub- und Fördervorrichtung 25 auf gleichem Niveau zur Förderebene 21 liegen oder sogar etwas oberhalb dieser Förderebene 21 verbleiben können. Gemäß der Darstellung in Fig. 6 weist jedoch auch die Hub- und Fördervorrichtung 25 eine Ausgangs- bzw. Ruhestellung 85 auf, in welcher deren Förderebene 26 vorzugsweise unter dem Niveau der Förderebene 21 liegt. Die Ausgangs- bzw. Ruhestellung 85 der Hub- und Fördervorrichtung 25 liegt dabei vorzugsweise etwas tiefer als die Ausgangs- bzw. Ruhestellung 84 der Bremsvorrichtung 35.

In der Ausgangs- bzw. Ruhestellung 84 der Bremsvorrichtung 35 sind die Bremsflächen der Bremsvorrichtung 35 zumindest weitgehendst inaktiv. Ebenso ist die Transportfunktion der Hub- und Fördervorrichtung aufgrund der unter die Förderebene 21 abgesenkten Förderebene 26 der Förderorgane 27, 28 grundsätzlich wirkungslos. In den Ausgangs- bzw. Ruhestellungen 84, 85 der Bremsvorrichtung 35 und der Hub- und Fördervorrichtung 25 kann die Fördervorrichtung 4; 11 das umzusetzende Fördergut 3 in etwa in den Zentrumsbereich der Übergabeeinrichtung 1 bzw. zumindest teilweise in die in Draufsicht im wesentlichen rechteckige bzw. quadratische Förderebene 26 der Hub- und Fördervorrichtung 25 bewegen. Insbesondere kann dabei auch eine geradlinige Übergabe von Fördergut 3 ausgehend von der Fördervorrichtung 4; 11 auf eine Fördervorrichtung 24 - Fig. 1 - oder umgekehrt ausgeführt werden bzw. ein kontinuierlicher Weitertransport von Fördergut 3 über die Übergabeeinrichtung 1 hinweg, erfolgen.

Für eine Umsetzung von Fördergut 3 zwischen winkelig zueinander verlaufenden Fördervorrichtungen 4; 11 und 5, 6 kann an der Übergabeeinrichtung 1 folgender Ablauf ausgeführt werden: Sobald die Unterseite 36 des an die Übergabeeinrichtung 1 herantransportierten Fördergutes 3 wenigstens teilweise innerhalb der Förderebene 26 liegt bzw. wenigstens teilweise auf Höhe der Bremsflächen, insbesondere der Bremsleisten 39, 40 liegt, wird die Antriebsvorrichtung 46 in Gang gesetzt. Infolge dessen wird die Bremsvorrichtung 35 in die Aktivstellung 86 überführt, in welcher deren Bremsflächen bzw. Bremsleisten 39, 40 zumindest auf gleiche Höhe zur Förderebene 21 liegen, vorzugsweise jedoch oberhalb des Niveaus der Förderebene 21 angehoben werden. In dieser Aktivstellung 86 der Bremsvorrichtung 35 können deren Bremsorgane 37, 38 bzw. die Bremsflächen der Bremsleisten 39, 40 mit der Unterseite 36 des Fördergutes 3 in reibschlüssigen Kontakt treten. Ein auf der Fördervorrichtung 4; 11 herantransportiertes Fördergut 3 wird also via die Bremsvorrichtung 35, insbesondere mittels deren Reibungs- bzw. Bremsflächen, wenigstens verzögert und gegebenenfalls in seiner Bewegung gänzlich gestoppt. Ein Stop des zugeförderten Fördergutes 3 kann vor allem dann erreicht werden, wenn dessen Unterseite 36 mittels der Bremsvorrichtung 35 gänzlich von der Fördervorrichtung 4; 11 abgehoben wird und die Bremsorgane 37, 38 ausreichend lang sind bzw. eine ausreichende Bremswirkung erzielen. Die Transportgeschwindigkeit der Fördervorrichtung 4; 11 kann also in vorteilhafter Weise kontinuierlich beibehalten werden.

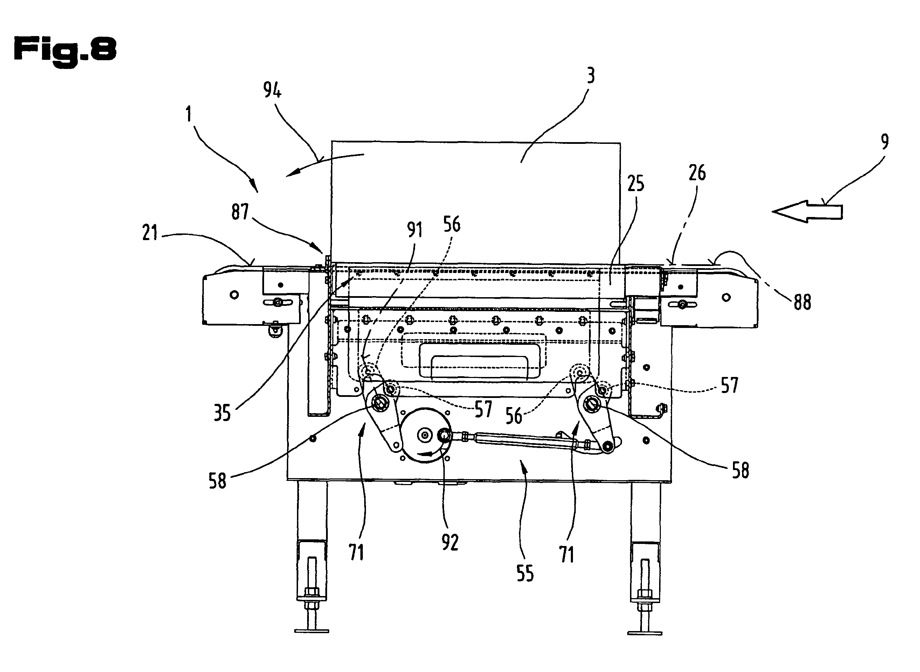

Bevorzugt wird die Bewegungsenergie des Fördergutes 3 nicht alleinig durch die Bremsvorrichtung 35 abgebaut, sondern ist vorzugsweise ein Anschlagelement 87 ausgebildet, mit welchem das via die Bremsvorrichtung 35 bereits verzögerte Fördergut 3 auf der Übergabeeinrichtung 1 gänzlich zum Stillstand gebracht werden kann. Dieses Anschlagelement 87 ist vorzugsweise an der Hub- und Fördervorrichtung 25, insbesondere an dessen Tragrahmen 29 ausgebildet. Das beispielsweise leistenartige Anschlagelement 87 ragt dabei zumindest geringfügig über die Förderebene 26 der Hub- und Fördervorrichtung 25. Sobald das auf der Hub- und Fördervorrichtung 25 angeordnete und via dessen Anhebe- und Absenkfunktion höhenvariable Anschlagelement 87 über die Förderebene 21 ragt, ist der Transportweg für das Fördergut 3 im Bereich der Übergabeeinrichtung 1 begrenzt. Ebenso wird ein von der Bremsvorrichtung 35 zuvor verzögertes Fördergut 3 via das Anschlagelement 87 im Endbereich der Verzögerungsstrecke der Bremsvorrichtung 35 gänzlich gestoppt, indem zumindest der untere, vordere Kanten- bzw. Randbereich des Fördergutes 3 auf dem Anschlagelement 87 auftrifft. In Bremswirkrichtung auf der Bremsvorrichtung 35 dahinrutschende bzw. quer zur eigentlichen Förderrichtung - Pfeil 34 - der Hub- und Fördervorrichtung 25 herantransportierte Fördergüter 3 werden also spätestens in Höhe des vorzugsweise starr montierten Anschlagelementes 87 gänzlich abgebremst, wie dies aus Fig. 8 ersichtlich ist.

Spätestens nachdem das Fördergut 3 an dem über die Förderebene 21 heraustretenden bzw. über die Förderebene 26 ragendem Anschlagelement 87 zum Stillstand gekommen ist, kann die Querförderung für das Fördergut 3 eingeleitet werden. Hierzu wird das Fördergut 3 von der Hub- und Fördervorrichtung 25 übernommen bzw. von der Bremsvorrichtung 35 an die Hub- und Fördervorrichtung 25 übergeben. Dies kann dadurch erfolgen, dass die Förderebene 26 der Hub- und Fördervorrichtung 25 über das Niveau der Bremsvorrichtung 35 bzw. deren Bremsflächen angehoben wird und/oder die Bremsvorrichtung 35 das Fördergut 3 lasttragend an die Hub- und Fördervorrichtung 25 übergibt, indem die Bremsflächen der Bremsvorrichtung 35 wieder abgesenkt werden. Vorzugsweise wird das Fördergut 3 via die sich etwas absenkende Bremsvorrichtung 35 an die sich gleichzeitig über die Förderebene 21 aushebende Hub- und Fördervorrichtung 25 übergeben. Durch einfache Aktivierung der Antriebsvorrichtung 51 kann dann das Fördergut 3 quer zur Förderrichtung - gemäß Pfeil 9 - abtransportiert und an eine weitere Förderbahn übergeben werden, um den Weitertransport des Fördergutes 3 sicherzustellen. Dabei ist es möglich, die Förderfunktion der Hub- und Fördervorrichtung 25 diskontinuierlich oder auch kontinuierlich zu betreiben.

Wesentlich ist, dass es durch den Kurbeltrieb 55 bzw. den Pleueltrieb 72 grundsätzlich lediglich erforderlich ist, eine einzelne, unidirektional antreibende Antriebsvorrichtung 46 vorzusehen, um sowohl die Bremsvorrichtung 35 als auch die Hub- und Fördervorrichtung 25 zwischen deren Ausgangs- bzw. Ruhestellungen 84, 85 und der Aktivstellung 86 für die Bremsvorrichtung 35 und einer Aktivstellung 88 für die Hub- und Fördervorrichtung 25 und umgekehrt verstellen zu können. In der Aktivstellung 88 der Hub- und Fördervorrichtung 25 ist deren Förderebene 26 zumindest geringfügig über die im wesentlichen horizontale Förderebene 21 angehoben, sodass eine ungehinderte bzw. blockierfreie Querförderung für das Fördergut 3 erzielt wird. Wesentlich ist weiters, dass in der Aktivstellung 88 der Hub- und Fördervorrichtung 25 die Bremsvorrichtung 35 inaktiv ist, indem deren Bremsflächen bzw. Bremsorgane 37, 38 zumindest geringfügig unter das Niveau der Aktivstellung 88 der Hub-und Fördervorrichtung 25 abgesenkt werden.

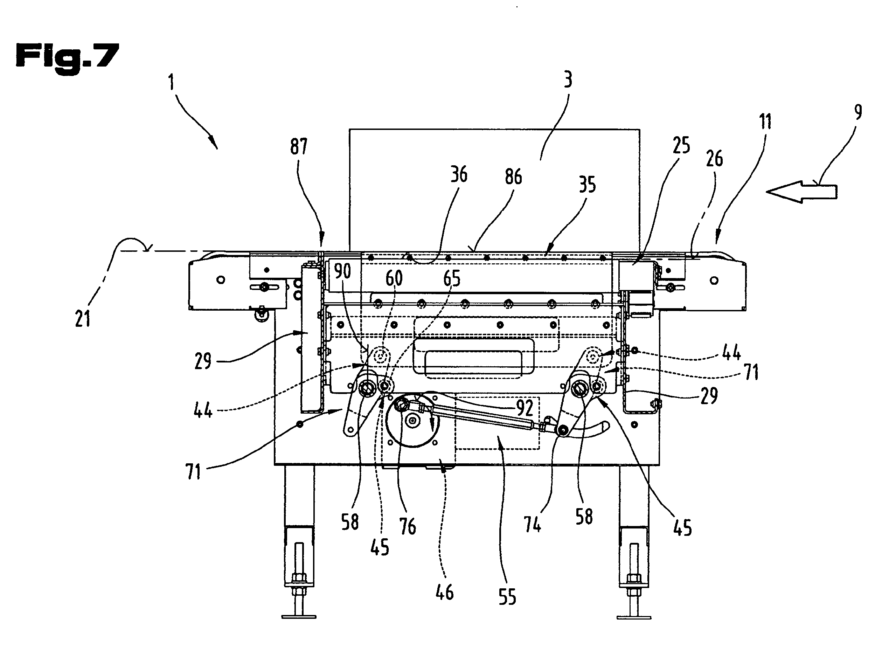

Die drei Funktionen der Bremsvorrichtung 35 - nämlich inaktiv, aktiv sowie Übergeben an die Hub- und Fördervorrichtung 25 - werden vorzugsweise dadurch erzielt, dass die Stellvorrichtung 44 bzw. der Stellarm 56 für die Bremsvorrichtung 35 zwischen einem ersten, unteren Totpunkt 89, einem oberen Totpunkt 90 und einem weiteren, unteren Totpunkt 91 verstellt wird, wie dies in den Fig. 7 bis 9 schematisch veranschaulicht wurde. Insbesondere liegt die Gelenksverbindung 60 in der Ausgangs- bzw. Ruhestellung 84 der Bremsvorrichtung 35 in einem unteren Totpunkt 89 - gemäß Fig. 6. In der maximal angehobenen Stellung der Bremsvorrichtung 35 bzw. deren Bremsflächen liegt die Gelenksverbindung 60 in einem oberen Totpunkt 90 - Fig. 7 -, in welchem die Reibungs- bzw. Bremsflächen mit dem Fördergut 3 in Eingriff bzw. Kontakt stehen können. In weiterer Folge gelangt die Gelenksverbindung 60 durch das Weiterbetreiben, insbesondere Weiterdrehen, der Antriebsvorrichtung 46 in einen zweiten, unteren Totpunkt 91 - Fig. 8 - in welchem die Bremsvorrichtung 35 im Vergleich zur Stellung beim oberen Totpunkt 90 wieder etwas abgesenkt ist. D.h., die Bremsvorrichtung 35 führt via die Stellvorrichtung 44 bzw. den Stellarm 56 eine bidirektionale Vertikalbewegung zwischen drei unterschiedlichen Höhenpositionen aus, wobei die höchste Stellung der Bremsvorrichtung 35 zwischen der vergleichsweise niedrigeren ersten und dritten Stellung der Bremsvorrichtung 35 liegt.

Vorteilhaft ist bei der erfindungsgemäßen Ausbildung, dass mit lediglich einer vollen Umdrehung der Kurbelscheibe 75 bzw. eines dem gemäßen Kurbelarmes, die Bremsvorrichtung 35 und die Hub- und Fördervorrichtung 25 wieder in ihre Ausgangs- bzw. Ruhestellungen 84, 85 zurückkehren, wie dies aus Fig. 6 ersichtlich ist. Für einen kompletten Arbeitszyklus der Übergabeeinrichtung 1 ist also die Kurbelscheibe 75 der Antriebsvorrichtung 46 in eine undirektionale Drehbewegung um 360 ° entsprechend dem Pfeil 92 zu versetzen. Dadurch ist eine erhebliche, steuerungstechnische Vereinfachung ermöglicht, da im Extremfall lediglich ein Sensor 92 erforderlich ist, mit welchem eine Annäherung von Fördergut 3 an die Übergabeeinrichtung 1 detektierbar ist bzw. mit welchem Sensor 92 das Einlagen eines herantransportierten Fördergutes 3 in den Bereich der Förderebene 26 der Hub- und Fördervorrichtung 25 erfassbar ist. Diese Sensor 92 ist mit einer nicht dargestellten, elektronischen Steuervorrichtung verbunden und gibt die entsprechenden Erfassungswerte an diese weiter, um die Antriebsvorrichtung 46 und/oder die Antriebsvorrichtung 51 entsprechend dem erforderlichen Ablauf automatisiert ansteuern zu können.

Gegebenenfalls ist ein weiterer Sensor 93 bzw. Geber vorgesehen, mit welchem die Antriebsvorrichtung 46 nach der Ausführung einer vollen Umdrehung der Kurbelscheibe 75 bzw. eines dem gemäßen Kurbeltriebes wieder in den Stillstand versetzt wird.

Mit einer vollständigen Umdrehung der Kurbelscheibe 75 wird dabei ein kompletter Arbeitszyklus der Bremsvorrichtung 35 und der Hub- und Fördervorrichtung 25 ausgeführt.

Bei Ausbildung einer umkehrbaren Antriebsvorrichtung 46 wäre es auch möglich, den Kurbeltrieb 55 bzw. die Kurbelscheibe 75 nur über einen Bruchteil von 360° zu drehen, beispielsweise eine halbe Umdrehung vorzusehen, um einen kompletten Arbeitszyklus der Bremsvorrichtung 35 und der Hub- und Fördervorrichtung 25 zu erzielen. Dies ist jedoch mit vergleichsweise höherem, steuerungstechnischen Aufwand verbunden.

Wie weiters aus den Fig. 6 bis 8 deutlich ersichtlich ist, führt die Bremsvorrichtung 35, insbesondere dessen Bremsleiste 39, 40 via die drehbeweglich gelagerte Stellvorrichtung 44, insbesondere via die Stellarme 56, eine kombinierte Vertikalbewegung senkrecht zur Förderebene 21 und gleichzeitig eine Horizontalbewegung aus. Im speziellen wird dies durch die um die Schwenkachse 58 verschwenk- bzw. verdrehbar gelagerten Stellarme 56 bewirkt.

Gleichermaßen führt vorzugsweise auch die Hub- und Fördervorrichtung 25 via die drehbeweglich gelagerte Stellvorrichtung 45 bzw. deren Stellarme 57 eine kombinierte Vertikalbewegung vertikal zur Förderebene 21 und gleichzeitig eine Horizontalbewegung aus. Dies wird ebenso durch die sich um die Schwenkachse 58 verschwenkenden Stellarme 57 bewirkt.

Via die Stellvorrichtung 44 schwenkt also die Bremsvorrichtung 35, insbesondere deren Bremsfläche, über die Förderebene 21 hinaus bzw. auch wieder unter die Schwenkebene 21 zurück. Vorzugsweise wird auch die Hub- und Fördervorrichtung 25 via eine derartige Schwenkbewegung über die Förderebene 21 angehoben und nachfolgend wieder unter die Förderebene 21 abgesenkt.

Alternativ ist es auch denkbar, die Antriebsvorrichtung 46 durch eine Kolben- bzw. Zylinderanordnung zu bilden und somit eine lineare Verstellbewegung für die Stellvorrichtungen 44, 45 bereitzustellen. Alternativ wäre es möglich, die Hub- und Absenkbewegung für die Hub- und Fördervorrichtung 25 durch eine lineare Bewegung, beispielsweise ausgehend von einer Kolben- und Zylinderanordnung, zu bewerkstelligen.

Vor allem für die Verstellung der Bremsvorrichtung 35 ist diese quasi aus der Förderebene 21 herausschwenkende, kombinierte Vertikal- und Horizontalbewegung via die Stellarme 56 von besonderem Nutzen. Da die Bremsvorrichtung 35, insbesondere deren wenigstens eine Bremsleiste 39, 40 bei der Verstellung in ihre Aktivstellung 86 sowohl in Vertikalrichtung senkrecht zu dieser Förderebene 21 und gleichzeitig auch in Horizontalrichtung bzw. in paralleler Richtung zur Förderrichtung - Pfeil 9 - der ersten Fördervorrichtung 4; 11 bewegt wird, kann ein auf die Bremsvorrichtung 35, insbesondere auf die Bremsflächen der Bremsleisten 39, 40, aufgelaufenes Fördergut 3 aktiv gegen das Anschlagelement 87 gedrückt werden. Insbesondere kann durch die aktive Horizontalbewegung der Bremsvorrichtung 35 ein von den Bremsorganen 37, 38 bzw. von den Bremsleisten 39, 40 aufgenommenes Fördergut 3 aktiv bzw. treibend gegen das beispielsweise leistenförmige Anschlagelement 87 gedrängt werden. In vorteilhafter Art und Weise kann dadurch ein schief bzw. verdreht herangefördertes bzw. abgebremstes Fördergut 3 auch ausgerichtet werden. Vor allem kann durch diese aktive Ausrichtung des Fördergutes 3 infolge der Schwenkbewegung der Bremsvorrichtung 35 erreicht werden, dass die Kantenbereiche des beispielsweise quader- oder würfelförmigen Fördergutes 3 möglichst parallel bzw. rechtwinkelig zu den Förderrichtungen - Pfeil 9 bzw. Pfeil 34 - der Fördervorrichtungen 4; 11 bzw. 5, 6 verlaufen. Diese aktive, von der Antriebsvorrichtung 46 bereitgestellte Ausrichtbewegung für das Fördergut 3 begünstigt eine problemlose und ordnungsgemäße Umsetzung bzw. Übergabe von Fördergut 3 zwischen winkelig zueinander verlaufenden Fördervorrichtungen 4; 11 und 5, 6. Beispielsweise kann auch ein nicht vollständig gegen das Anschlagelement 87 aufgelaufenes Fördergut 3 durch die aktive Andrückbewegung gegen das Anschlagelement 87 besser orientiert bzw. gerade gerichtet werden. Diese schwenkende bzw. bogenförmige Andrückbewegung ist in Fig. 8 mittels einem Pfeil 94 veranschaulicht worden. Die Bremsvorrichtung 35 weist neben ihrer Bremsfunktion also auch eine aktive Ausrichtfunktion für das Fördergut 3 auf, wenn die Bremsvorrichtung 35 mit einem Anschlagelement 87 zusammenwirkt.

Diese Andrückbewegung und Abfangbewegung der Bremsvorrichtung 35 für Fördergut 3 - gemäß Pfeil 94 - wird durch die vorteilhafte, schwenkende Lagerung der Stellvorrichtung 44 bzw. durch die Verschwenkung der Stellarme 56 für die Bremsvorrichtung 35 um die Schwenkachse 58 bewirkt. Die Anlenkung des Stellarmes 56 auf der Trägerwelle 62 ist also derart festgelegt, dass bei einer Verdrehung der Trägerwelle 62 um die Schwenkachse 58 die Bremsvorrichtung 35, insbesondere deren wenigstens eine Bremsleiste 39, 40 bei der Verstellung in die Aktivstellung 86 bzw. in Richtung zur Aktivstellung 86 in Vertikalrichtung senkrecht zur Förderebene 21 und auch in Horizontalrichtung in Richtung zum Anschlagelement 87 bewegt wird, wie dies mittels dem Pfeil 94 veranschaulicht wurde.

Wie den Fig. 6 bis 8 weiters eindeutig zu entnehmen ist, ist der Stellarm 56 für die Bremsvorrichtung 35 bezugnehmend auf die Verschwenkebene 66 steiler ausgerichtet, als der Stellarm 57 für die Hub- und Absenkfunktion der Hub- und Fördervorrichtung 25. Mit anderen Worten, ist der Stellarm 56 für die Bremsvorrichtung 35 bei einer Verschwenkung der Trägerwelle 62 um die Schwenkachse 58 einem oberen Totpunkt 90 dieser Schwenkbewegung näher, als der Stellarm 57 für die Hub- und Absenkfunktion der Hub- und Fördervorrichtung 25. Dadurch wird erreicht, dass während der Anhebung der Hub- und Fördervorrichtung 25 ausgehend von ihrer Ausgangs- bzw. Ruhestellung 85 - Fig. 6 - in ihre Aktivstellung 88 - Fig. 8 - oberhalb der Förderebene 21, die Bremsvorrichtung 35 eine Hub- und Absenkbewegung ausführt, wenn der Stellarm 57 den oberen Totpunkt 90 überschreitet. Dadurch wird quasi ein Rückzug der Bremsvorrichtung 35 erzielt, während die Hub- und Fördervorrichtung 25 weiter bis zum höchsten Niveau bzw. bis zur Aktivstellung 88 - Fig. 8 - ansteigt und dabei das Fördergut 3 lasttragend übernimmt, um den Quertransport zu ermöglichen.

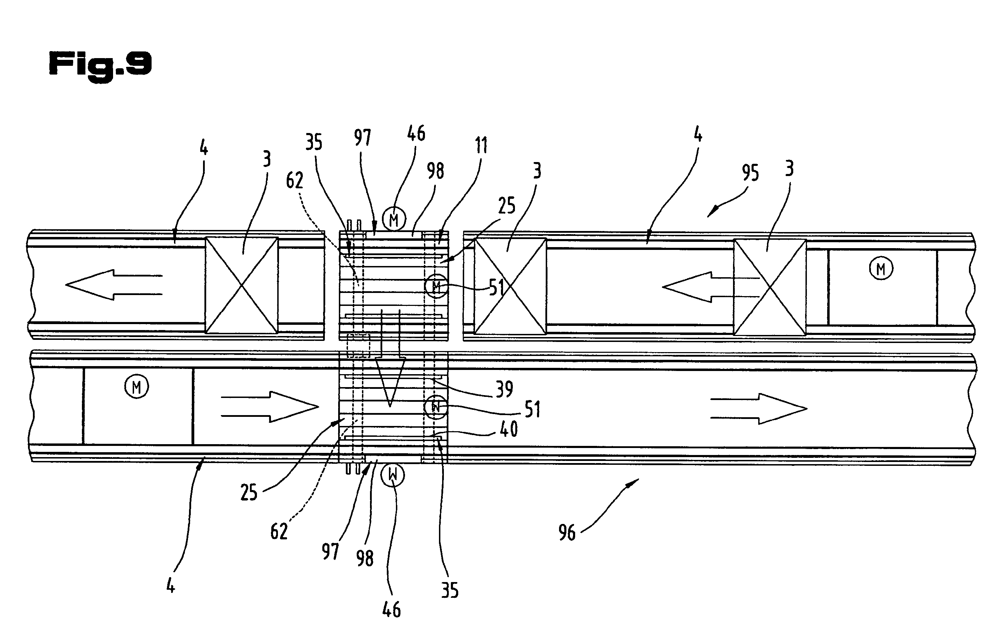

In Fig. 9 ist die Draufsicht auf eine mögliche Ausführungsform eines Fördersystems 2 gezeigt, bei welchem zwei erfindungsgemäße Übergabeeinrichtungen 1 zum Einsatz kommen.

Hierbei sind zwei parallel zueinander verlaufende Förderbahnen 95, 96 vorgesehen. Diese Förderbahnen 95, 96 transportieren dabei das Fördergut 3 beispielsweise in zueinander entgegengesetzten Richtungen, wie dies durch Pfeile veranschaulicht wurde.

Mittels den Übergabeeinrichtungen 1 ist es dabei ermöglicht, Fördergut 3 von einer Förderbahn 95 auf die andere Förderbahn 96 zu übergeben bzw. in dessen Transportfluss einzuschleusen.

Dieses Fördersystem 2 ermöglicht grundsätzlich die Schaffung X-, Z- oder U-förmiger Transportwege für das Fördergut 3, wenn die vorteilhafte Funktionalität der Übergabeeinrichtungen 1 eingesetzt wird. Unter Ausnutzung der Funktionen der Bremsvorrichtung 35 und der Hub- und Fördervorrichtung 25 der beiden Übergabeeinrichtungen 1 sind also relativ verzweigte bzw. kreuzende Förderspuren für das Fördergut 3 aufbaubar.

Wie weiters schematisch veranschaulicht wurde, kann auch der Hub- und Fördervorrichtung 25 eine Anschlagvorrichtung 97 zugeordnet sein. Diese Anschlagvorrichtung 97 begrenzt den Transportweg von Fördergut 3 auf der Hub- und Fördervorrichtung 25. Insbesondere wird dadurch verhindert, dass Fördergut 3 über das Ende der Förderstrecke der Hub- und Fördervorrichtung 25 hinauslaufen kann. Diese Anschlagvorrichtung 97 ist entweder durch ein starres oder gedämpftes Anschlagelement 98 für das Fördergut 3 gebildet. Das Anschlagelement 98 kann dabei am Grundrahmen der Übergabeeinrichtung 1 oder aber auf dem Tragrahmen der Hub- und Fördervorrichtung 25 befestigt sein.

Ist bestimmtes Fördergut 3 auf dem Fördersystem 2 via die Übergabeeinrichtung 1 von der Förderbahn 95 auf die Förderbahn 96 umzusetzen, so kommen die Bremsvorrichtung 35 und die Hub- und Fördervorrichtung 25 der Übergabeeinrichtung 1 zum bestimmungsgemäßen Einsatz.

Ferner ist die Übergabeeinrichtung 1 derart konstruiert, dass zumindest die Antriebsvorrichtung 46 für die Bremsvorrichtung 25 und für die Hubfunktion der Hub- und Fördervorrichtung 35 wahlweise an einer von zwei gegenüberliegenden Seiten der Übergabeeinrichtung 1 bzw. dessen Grundrahmen montiert werden kann. Dadurch wird eine hohe Einsatzflexibilität und eine Vielzahl von Konfigurationsmöglichkeiten für die Übergabeeinrichtung 1 bereitgestellt. Weiters sind relativ nahe aneinander liegende Förderbahnen 95, 96 erzielbar. Bei größerem Abstand zwischen den beiden, parallel geführten Förderbahnen 95, 96 ist als Verbindungsglied zwischen den beiden Übergabeeinrichtungen 1 ein entweder antreibendes oder freilaufend ausgeführtes Teilstück einer Fördervorrichtung vorgesehen.

Weiters ist in Fig. 9 der Unterschied zwischen einer sich durchgängig erstreckenden Fördervorrichtung 4 bzw. Förderbahn 96 und von an die Übergabeeinrichtung 1 andockenden bzw. anschließenden Fördervorrichtungen 4, wobei dann an der Übergabeeinrichtung 1 eine zusätzliche, eigenständige Fördervorrichtung 11 erforderlich ist, eindeutig zu entnehmen.

Weiters ist klar ersichtlich, dass bei inaktiver Bremsvorrichtung 35 und inaktiver bzw. abgesenkter Hub- und Fördervorrichtung 25 auch ein durchgehender bzw. geradliniger Weitertransport von Fördergut 3 auf den Förderbahnen 95 bzw. 96 ermöglicht ist.

Ein Vorteil der erfindungsgemäßen Übergabeeinrichtung 1 liegt auch darin, dass diese ohne wesentliche Adaptierungen für ein Abbremsung von längs und quer zu- oder herangefördertem Fördergut 3 geeignet ist. Insbesondere bei einer Übergabe von Fördergut 3 von der Übergabeeinrichtung 1 in der Förderbahn 95 auf die Übergabeeinrichtung 1 in der Förderbahn 96 kann letztere Übergabeeinrichtung 1 zur Querabbremsung des entsprechend dem dargestellten Pfeil zugeförderten Fördergutes 3 eingesetzt werden. Die beiden, miteinander korrespondierenden Übergabeeinrichtungen 1 sind in diesem Fall mechanisch identisch aufgebaut und können zur Längsabbremsung von entlang den Förderbahnen 95, 96 bewegten Fördergütern 3 und zur Querabbremsung von zwischen den Förderbahnen 95, 96 übergebenen Fördergütern 3 genutzt werden.

Während der Übergabe des Fördergutes 3 von der Förderbahn 95 auf die Förderbahn 96 befinden sich beide Übergabeeinrichtungen 1 in der in Fig. 8 dargestellten Arbeitsphase, in der die Hub- und Fördervorrichtung 25 in der Aktivstellung 88 vorliegt und die Bremsvorrichtung 35 bzw. deren Bremsflächen unterhalb der Förderebene 26 der Hub- und Fördervorrichtung 25 liegen.

Sobald von einer entsprechenden Sensorik erkannt wird, dass das Fördergut 3 wenigstens teilweise an bzw. auf der zweiten Übergabeeinrichtung 1 eingelangt ist bzw. ausreichend nahe zu dieser zweiten Übergabeeinrichtung 1 ist, so wird die Antriebsvorrichtung 46 an der zweiten bzw. das Fördergut 3 empfangenden Übergabeeinrichtung 1 in Betrieb gesetzt. Somit tritt die Bremsvorrichtung 35 allmählich über das Förderniveau der Hub- und Fördervorrichtung 25, indem die Hub- und Fördervorrichtung 25 abgesenkt und gleichzeitig die Bremsvorrichtung 35 angehoben wird, bis die Bremsflächen der Bremsvorrichtung 35 mit der Unterseite des Fördergutes 3 in reibschlüssigen Kontakt treten. Das quasi quer herangeförderte Fördergut 3 wird somit via die Bremsvorrichtung 35 abgebremst bzw. zumindest teilweise verzögert. Letztendlich wird das Fördergut 3 von der Bremsvorrichtung 35, insbesondere von dessen Bremsleisten 39, 40 lasttragend übernommen und in weiterer Folge an die Fördervorrichtung 4 übergeben, welche den Weitertransport des Fördergutes 3 bewirkt.

Auch bei einer derartigen Querzuförderung von Fördergut 3 auf die Übergabeeinrichtung 1 kann also die Bremsvorrichtung 35 genutzt werden, um das herangeförderte Fördergut 3 zu verzögern bzw. abzubremsen und - falls überhaupt - nur mit verminderter Energie gegen die Anschlagvorrichtung 97 anstoßen zu lassen. Aufwendige, d.h. massive bzw. komplex dämpfende Anschlagvorrichtungen 97 können somit erübrigt werden.

Gegebenenfalls ist es dabei auch möglich, die Trägerwellen 62 bzw. die dementsprechenden Hubwellen von parallel genutzten Übergabeeinrichtungen 1 zu koppeln, wie dies mit strichlierten Linien schematisch veranschaulicht wurde. In diesem Fall ist grundsätzlich nur eine Antriebsvorrichtung 46 für die Vertikalverstellung der Hub- und Fördervorrichtung 25 und die Bremsvorrichtung 35 beider Übergabeeinrichtungen 1 erforderlich bzw. zu betreiben.

Der Ordnung halber sei abschließend darauf hingewiesen, dass zum besseren Verständnis des Aufbaus der Übergabeeinrichtung 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 8 und 9 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Übergabeeinrichtung
- 2: Fördersystem
- 3: Fördergut
- 4: Fördervorrichtung
- 5: Fördervorrichtung

- 6: Fördervorrichtung
- 7: Förderorgan
- 8: Förderorgan
- 9: Pfeil
- 10: Randbereich

- 11: Fördervorrichtung
- 12: Förderorgan
- 13: Förderorgan
- 14: Förderriemen
- 15: Förderriemen

- 16: Umlenkscheibe
- 17: Umlenkscheibe
- 18: Abstand
- 19: Drehachse
- 20: Drehachse

- 21: Förderebene
- 22: Aufstandsebene
- 23: Unter- bzw. Traggestell
- 24: Fördervorrichtung
- 25: Hub- und Fördervorrichtung

- 26: Förderebene
- 27: Förderorgan
- 28: Förderorgan
- 29: Tragrahmen
- 30: Förderrolle

- 31: Förderrolle
- 32: Drehachse
- 33: Drehachse
- 34: Pfeil
- 35: Bremsvorrichtung

- 36: Unterseite
- 37: Bremsorgan
- 38: Bremsorgan
- 39: Bremsleiste
- 40: Bremsleiste

- 41: Breite
- 42: Länge
- 43: Abstand
- 44: Stellvorrichtung
- 45: Stellvorrichtung

- 46: Antriebsvorrichtung
- 47: Getriebemotor
- 48: Elektromotor
- 49: Einbremsvorrichtung
- 50: Getriebeanordnung

- 51: Antriebsvorrichtung
- 52: Getriebemotor
- 53: Elektromotor
- 54: Riementrieb
- 55: Kurbeltrieb

- 56: Stellarm
- 57: Stellarm
- 58: Schwenkachse
- 59: Ende
- 60: Gelenksverbindung

- 61: Schwenklagerung
- 62: Trägerwelle
- 63: Grundrahmen
- 64: Ende
- 65: Gelenksverbindung

- 66: Verschwenkebene
- 67: Winkel
- 68: Länge
- 69: Länge
- 70: Antriebsarm

- 71: Schwinghebel
- 72: Pleueltrieb
- 73: Koppelstange
- 74: Gelenksverbindung
- 75: Kurbelscheibe

- 76: Gelenksverbindung
- 77: Abstand
- 78: Bewegungsübertragungsglied
- 79: Bewegungsübertragungsglied
- 80: Lagervorrichtung

- 81: Lagervorrichtung
- 82: Trägerelement
- 83: Stützrolle
- 84: Ausgangs- bzw. Ruhestellung
- 85: Ausgangs- bzw. Ruhestellung

- 86: Aktivstellung
- 87: Anschlagelement
- 88: Aktivstellung
- 89: unterer Totpunkt
- 90: oberer Totpunkt

- 91: unterer Totpunkt
- 92: Sensor
- 93: Sensor
- 94: Pfeil
- 95: Förderbahn

- 96: Förderbahn
- 97: Anschlagvorrichtung
- 98: Anschlagelement

## Patentansprüche

1. Übergabeeinrichtung (1) für stückhaftes Fördergut (3) zwischen einer ersten Fördervorrichtung (4; 11) und wenigstens einer weiteren, dazu quer oder winkelig verlaufenden Fördervorrichtung (5, 6), bei der das Fördergut (3) auf einer im wesentlichen horizontalen Förderebene (21) transportierbar ist, welche Förderebene (21) entweder durch wenigstens zwei Förderorgane (7, 8) einer die Übergabeeinrichtung (1) überbrückenden, ersten Fördervorrichtung (4) oder durch separate, direkt an der Übergabeeinrichtung (1) ausgebildete Förderorgane (12, 13) einer ersten Fördervorrichtung (11) definiert ist, wobei eine Hub- und Fördervorrichtung (25) ausgebildet ist, deren Förderorgane (27, 28) über und unter die Förderebene (21) anheb- und absenkbar sind, um das Fördergut (3) von der ersten Fördervorrichtung (4; 11) zu übernehmen und unblockiert an eine der weiteren Fördervorrichtungen (5, 6) zu übergeben, **dadurch gekennzeichnet, dass** eine über und unter die Förderebene (21) anheb- und absenkbare Bremsvorrichtung (35) ausgebildet ist, um wahlweise in und außer reibschlüssigen Kontakt mit einer Unterseite (36) des Fördergutes (3) zu gelangen, wobei eine erste Stellvorrichtung (44) für die anheb- und absenkbare Bremsvorrichtung (35) und eine zweite Stellvorrichtung (45) für die Anhebung und Absenkung der Hub- und Fördervorrichtung (25) mechanisch bewegungsgekoppelt und mit nur einer gemeinsamen, ersten Antriebsvorrichtung (46) verbunden sind.

2. Übergabeeinrichtung nach Anspruch 1, **dadurch gekennzeichnet, dass** die erste Fördervorrichtung (4; 11) in der Förderebene (21) zueinander beabstandete, als Endlosschleife ausgebildete, umlaufende Förderorgane (7, 8; 12, 13), insbesondere Förderketten oder Förderriemen (14, 15), umfasst.

3. Übergabeeinrichtung nach Anspruch 1 oder 2, **dadurch gekennzeichnet, dass** die Förderorgane (27, 28) der Hub- und Fördervorrichtung (25) durch eine Mehrzahl von Förderrollen (30, 31) gebildet sind, deren Drehachsen (32, 33) parallel zur Förderrichtung - Pfeil (9) - der ersten Fördervorrichtung (4; 11) verlaufen.

4. Übergabeeinrichtung nach Anspruch 3, **dadurch gekennzeichnet, dass** die Förderrollen (30, 31) an einem gemeinsamen Tragrahmen (29) der Hub- und Fördervorrichtung (25) gelagert sind.

5. Übergabeeinrichtung nach Anspruch 4, **dadurch gekennzeichnet, dass** eine Antriebsvorrichtung (51) für die Förderrollen (30, 31) auf dem Tragrahmen (29) befestigt ist.

6. Übergabeeinrichtung nach Anspruch 5, **dadurch gekennzeichnet, dass** die Antriebsvorrichtung (51) via einen Ketten- oder Riementrieb (54) mit einer Mehrzahl von Förderrollen (30, 31) bewegungsverbunden ist.

7. Übergabeeinrichtung nach Anspruch 1, **dadurch gekennzeichnet, dass** die erste Antriebsvorrichtung (46) einen unidirektional antreibenden Elektromotor (48) umfasst.

8. Übergabeeinrichtung nach Anspruch 1 oder 7, **dadurch gekennzeichnet, dass** die erste Antriebsvorrichtung (46) eine selbsthemmende Getriebeanordnung, einen Bremsmotor oder eine sonstige, bedarfsweise aktivierbare Einbremsvorrichtung (49) für die Stellvorrichtungen (44, 45) der Bremsvorrichtung (35) und der Hub-und Fördervorrichtung (25) umfasst.

9. Übergabeeinrichtung nach Anspruch 1, **dadurch gekennzeichnet, dass** die erste Antriebsvorrichtung (46) via einen Kurbeltrieb (55) bzw. eine Schubkurbelanordnung oder einen Pleueltrieb (72) mit den Stellvorrichtungen (44, 45) bewegungsgekoppelt ist.

10. Übergabeeinrichtung nach Anspruch 9, **dadurch gekennzeichnet, dass** die Bremsvorrichtung (35) und die Hub- und Fördervorrichtung (25) ausgehend von Ausgangs- bzw. Ruhestellungen (84; 85) unterhalb der Förderebene (21) nach einer vollständigen Umdrehung einer Kurbelscheibe (75) oder eines Kurbelarmes des Kurbeltriebes (55) bzw. Pleueltriebes (72) wieder in diese Ausgangs- bzw. Ruhestellungen (84; 85) zurückgeführt sind.

11. Übergabeeinrichtung nach einem oder mehreren der vorhergehenden Ansprüche, **dadurch gekennzeichnet, dass** die Stellvorrichtungen (44, 45) durch wenigstens einen drehbar gelagerten Schwinghebel (71) gebildet sind.

12. Übergabeeinrichtung nach Anspruch 11, **dadurch gekennzeichnet, dass** der Schwinghebel (71) zwei innerhalb einer Verschwenkebene (66) in einem Winkel (67) zueinander beabstandete bzw. versetzte Stellarme (56, 57) umfasst.

13. Übergabeeinrichtung nach Anspruch 12, **dadurch gekennzeichnet, dass** ein Stellarm (56) mit der Bremsvorrichtung (35) bzw. einem Bremsorgan (37, 38) beweglich gekoppelt ist und der weitere Stellarm (57) mit dem Tragrahmen (29) der Hub- und Fördervorrichtung (25) beweglich verbunden ist.

14. Übergabeeinrichtung nach einem oder mehreren der Ansprüche 11 bis 13, **dadurch gekennzeichnet, dass** der Schwinghebel (71) dreiarmig ausgebildet ist und einen Antriebsarm (70) und zwei Stellarme (56, 57) aufweist.

15. Übergabeeinrichtung nach Anspruch 14, **dadurch gekennzeichnet, dass** der Antriebsarm (70) mit dem Kurbeltrieb (55) bzw. Pleueltrieb (72), insbesondere mit dessen Koppelstange (73) gelenkig verbunden ist.

16. Übergabeeinrichtung nach Anspruch 14, **dadurch gekennzeichnet, dass** der Antriebsarm (70) und die beiden Stellarme (56, 57) auf einer gemeinsamen Trägerwelle (62) befestigt sind.

17. Übergabeeinrichtung nach Anspruch 16, **dadurch gekennzeichnet, dass** die beiden Stellarme (56, 57) in Längsrichtung einer Schwenkachse (58) der Trägerwelle (62) in einem Abstand (77) zueinander angeordnet sind.

18. Übergabeeinrichtung nach einem oder mehreren der vorhergehenden Ansprüche, **dadurch gekennzeichnet, dass** zwei gegenüberliegenden Endbereichen der Bremsvorrichtung (35), insbesondere einer Bremsleiste (39, 40), jeweils eine erste Stellvorrichtung (44) zugeordnet ist.

19. Übergabeeinrichtung nach einem oder mehreren der vorhergehenden Ansprüche, **dadurch gekennzeichnet, dass** zwei gegenüberliegenden Endbereichen des Tragrahmens (29) für die Hub- und Fördervorrichtung (25) jeweils eine zweite Stellvorrichtung (45) zugeordnet ist.

20. Übergabeeinrichtung nach Anspruch 18 und/oder 19, **dadurch gekennzeichnet, dass** die zueinander beabstandeten, ersten Stellvorrichtungen (44) via ein formbeständiges Element bzw. ein Bremsorgan (37, 38) der Bremsvorrichtung (35) und/oder die zueinander beabstandeten, zweiten Stellvorrichtungen (45) via den Tragrahmen (29) bewegungsverbunden sind.

21. Übergabeeinrichtung nach Anspruch 16 oder 17, **dadurch gekennzeichnet, dass** die Trägerwelle (62) an einem Grundrahmen (63) oder Unter- bzw. Traggestell (23) der Übergangseinrichtung (1) drehbeweglich gelagert ist.

22. Übergabeeinrichtung nach Anspruch 21, **dadurch gekennzeichnet, dass** den distalen Stirnendbereichen der Trägerwelle (62) jeweils eine Lagervorrichtung (80, 81) zugeordnet ist, welche am Grundrahmen (63) oder Unter- bzw. Traggestell (23) befestigt sind.

23. Übergabeeinrichtung nach einem oder mehreren der vorhergehenden Ansprüche, **dadurch gekennzeichnet, dass** die Bremsvorrichtung (35), insbesondere dessen Bremsleiste (39, 40), via die drehbeweglich gelagerte Stellvorrichtung (44) eine kombinierte Vertikal- und Horizontalbewegung ausführt.

24. Übergabeeinrichtung nach einem oder mehreren der vorhergehenden Ansprüche, **dadurch gekennzeichnet, dass** die Hub- und Fördervorrichtung (25) via die drehbeweglich gelagerte Stellvorrichtung (45) eine kombinierte Vertikal- und Horizontalbewegung ausführt.

25. Übergabeeinrichtung nach einem oder mehreren der vorhergehenden Ansprüche, **dadurch gekennzeichnet, dass** die Bremsvorrichtung (35), insbesondere deren wenigstens eine Bremsleiste (39, 40), bei der Verstellung via die Stellvorrichtung (44) in ihre Aktivstellung (86) oberhalb der Förderebene (21), in Vertikalrichtung senkrecht zur Förderebene (21) und auch in Horizontalrichtung in Richtung der Förderrichtung - Pfeil (9) - der ersten Fördervorrichtung (4; 11) bewegt ist.

26. Übergabeeinrichtung nach einem oder mehreren der vorhergehenden Ansprüche, **dadurch gekennzeichnet, dass** ein parallel zur Förderrichtung - Pfeil (34) - der Hub-und Fördervorrichtung (25) ausgerichtetes Anschlagelement (87) für das Fördergut (3) ausgebildet ist.

27. Übergabeeinrichtung nach Anspruch 26, **dadurch gekennzeichnet, dass** das Anschlagelement (87) auf dem Tragrahmen (29) der Hub- und Fördervorrichtung (25) befestigt ist und über dessen Förderebene (26) ragt.

28. Übergabeeinrichtung nach Anspruch 26 oder 27, **dadurch gekennzeichnet, dass** die Bremsvorrichtung (35), insbesondere deren wenigstens eine Bremsleiste (39, 40), bei der Verstellung via die Stellvorrichtung (44) in ihre Aktivstellung (86) in Vertikalrichtung senkrecht zur Förderebene (21) und auch in Horizontalrichtung in Richtung zum Anschlagelement (87) bewegt ist.

29. Übergabeeinrichtung nach einem oder mehreren der Ansprüche 26 bis 28, **dadurch gekennzeichnet, dass** das Anschlagelement (87) bezugnehmend auf die Förderrichtung - Pfeil (9) - der ersten Fördervorrichtung (4; 11) in einem Endbereich der Bremsvorrichtung (35) angeordnet ist.

30. Übergabeeinrichtung nach einem oder mehreren der vorhergehenden Ansprüche, **dadurch gekennzeichnet, dass** ein radial zur Schwenkachse (58) bzw. Trägerwelle (62) beabstandetes Ende (59) eines Stellarmes (56) der Stellvorrichtung (44) für die Bremsvorrichtung (35) ausgehend von einem ersten unteren Totpunkt (89), über einen oberen Totpunkt (90) zu einem weiteren unteren Totpunkt (91) und umgekehrt beweglich ist.

31. Übergabeeinrichtung nach Anspruch 30, **dadurch gekennzeichnet, dass** das Ende (59) des Stellarmes (56) einen Verstellweg ausgehend von einem ersten unteren Totpunkt (89), über einen oberen Totpunkt (90) zu einem weiteren unteren Totpunkt (91) nach einer halben Umdrehung des Kurbeltriebes (55), insbesondere dessen Kurbelscheibe (75), durchläuft und nach einer vollen Umdrehung des Kurbeltriebes (55) wieder im ersten unteren Totpunkt (89) liegt.

32. Übergabeeinrichtung nach Anspruch 30 oder 31, **dadurch gekennzeichnet, dass** das Ende (59) des Stellarmes (56) via eine Gelenksverbindung (60) mit der Bremsvorrichtung (35), insbesondere mit dessen Bremsorgan (37, 38) bzw. Bremsleiste (39, 40), bewegungsgekoppelt ist.

33. Übergabeeinrichtung nach einem oder mehreren der Ansprüche 12 bis 32, **dadurch gekennzeichnet, dass** eine Länge (68) des Stellarmes (56) für die Bremsvorrichtung (35) größer bemessen ist, als eine Länge (69) des Stellarmes (57) für die Hub- und Fördervorrichtung (25).

34. Übergabeeinrichtung nach einem oder mehreren der Ansprüche 12 bis 33, **dadurch gekennzeichnet, dass** der Stellarm (56) für die Bremsvorrichtung (35) bezugnehmend auf seine Verschwenkebene (66) steiler ausgerichtet ist, insbesondere bei einer Verschwenkung um die Schwenkachse (58) einem oberen Totpunkt (90) seiner Schwenkbewegung näher liegt, als der Stellarm (57) für die Hub- und Absenkfunktion der Hub- und Fördervorrichtung (25).

35. Übergabeeinrichtung nach Anspruch 1, **dadurch gekennzeichnet, dass** ein Anschlagelement für das Fördergut (3) in einem auf die Förderrichtung - Pfeil (9) - der ersten Fördervorrichtung (4; 11) bezogenen Endbereich von Bremsflächen bzw. Bremsleisten (39, 40) der Bremsvorrichtung (35) ausgebildet ist.

## Claims

1. Transfer system (1) for items (3) conveyed piece by piece between a first conveyor unit (4; 11) and at least one other conveyor unit (5, 6) extending transversely or at an angle thereto, whereby the conveyed items (3) can be fed on a substantially horizontal conveyor plane (21), which conveyor plane (21) is defined either by at least two conveyor elements (7, 8) of a first conveyor (4) spanning the transfer system (1) or by separate conveyor elements (12, 13) of a first conveyor unit (11) disposed directly on the transfer system (1), a brake mechanism (35) being provided which can be raised above and lowered below the conveyor plane (21) so that it can be selectively placed in and out of friction contact with the bottom face (36) of the conveyed item (3) as well as a lifting and conveying mechanism (25), the conveyor elements (27, 28) of which can be raised and lowered above and below the conveyor plane (21) so that the conveyed item (3) can be picked up from the first conveyor unit (4; 11) and transferred onto one of the other conveyor units (5, 6) without jamming, **characterised in that** a first positioning mechanism (44) for the raisable and lowerable brake mechanism (35) and a second positioning mechanism (45) for lifting and lowering the lifting and conveying mechanism (25) are mechanically coupled in displacement and are linked to one another by a common first drive system (46) only.

2. Transfer system as claimed in claim 1, **characterised in that** the first conveyor unit (4; 11) in the conveyor plane (21) has mutually spaced circulating conveyor elements (7, 8; 12, 13) in the form of an endless loop, in particular conveyor chains or conveyor belts (14, 15).

3. Transfer system as claimed in claim 1 or 2, **characterised in that** the conveyor elements (27, 28) of the lifting and conveying mechanism (25) are provided in the form of a plurality of conveyor rollers (30, 31), the axes of rotation (32, 33) of which extend parallel with the feed direction - arrow (9) - of the first conveyor unit (4; 11).

4. Transfer system as claimed in claim 3, **characterised in that** the conveyor rollers (30, 31) are mounted on a common bearing frame (29) of the lifting and conveying mechanism (25).

5. Transfer system as claimed in claim 4, **characterised in that** a drive system (51) for the conveyor rollers (30, 31) is attached to the bearing frame (29).

6. Transfer system as claimed in claim 5, **characterised in that** the drive system (51) is linked via a chain or belt drive (54) so as to displace a plurality of conveyor rollers (30, 31).

7. Transfer system as claimed in claim 1, **characterised in that** the first drive system (46) has an electric motor (48) which drives in one direction.

8. Transfer system as claimed in claim 1 or 7, **characterised in that** the first drive system (46) is a self-inhibiting gear mechanism, a brake motor or a brake hold mechanism (49) that can be otherwise activated as and when necessary for the positioning mechanisms (44, 45) of the brake mechanism (35) and the lifting and conveying mechanism (25).

9. Transfer system as claimed in claim 1, **characterised in that** the first drive system (46) is coupled via a crank drive (55) or a push-crank arrangement or a connecting drive (72) so as to displace the positioning mechanisms (44, 45).

10. Transfer system as claimed in claim 9, **characterised in that**, from initial or non-operating positions (84; 85) below the conveyor plane (21), the brake mechanism (35) and the lifting and conveying mechanism (25) are returned to these initial or non-operating position (84; 85) after a complete rotation of a crank wheel (75) or a crank arm of the crank drive (55) or connecting drive (72).

11. Transfer system as claimed in one or more of the preceding claims, **characterised in that** the positioning mechanisms (44, 45) are provided in the form of at least one rotatably mounted swing lever (71).

12. Transfer system as claimed in claim 11, **characterised in that** the swing lever (71) has two positioning arms (56, 57) spaced apart at an angle (67) or offset from one another within a pivot plane (66).

13. Transfer system as claimed in claim 12, **characterised in that** one positioning arm (56) is displaceably coupled with the brake mechanism (35) or a brake element (37, 38) and the other positioning arm (57) is displaceably linked to the bearing frame (29) of the lifting and conveying mechanism (25).

14. Transfer system as claimed in one or more of claims 11 to 13, **characterised in that** the swing lever (71) has three arms, one being a drive arm (70) and the other two being positioning arms (56, 57).

15. Transfer system as claimed in claim 14, **characterised in that** the drive arm (70) is articulatingly linked to the crank drive (55) or connecting drive (72), in particular to the coupling rod thereof (73).

16. Transfer system as claimed in claim 14, **characterised in that** the drive arm (70) and the two positioning arms (56, 57) are secured to a common bearing shaft (62).

17. Transfer system as claimed in claim 16, **characterised in that** the two positioning arms (56, 57) are disposed at a distance (77) from one another in the longitudinal direction of a pivot axis (58) of the bearing shaft (62).

18. Transfer system as claimed in one or more of the preceding claims, **characterised in that** two oppositely lying end regions of the brake mechanism (35), in particular a brake bar (39, 40), respectively co-operate with a first positioning mechanism (44).

19. Transfer system as claimed in one or more of the preceding claims, **characterised in that** two oppositely lying end regions of the bearing frame (29) for the lifting and conveying mechanism (25) co-operate respectively with a second positioning mechanism (45).

20. Transfer system as claimed in claim 18 and/or 19, **characterised in that** the mutually spaced first positioning mechanisms (44) are coupled in displacement via a dimensionally stable element or a brake element (37, 38) of the brake mechanism (35) and/or the mutually spaced second positioning mechanisms (45) are coupled in displacement via the bearing frame (29).

21. Transfer system as claimed in claim 16 or 17, **characterised in that** the bearing shaft (62) is rotatably mounted on a base frame (63) or sub- or support frame (23) of the transfer mechanism (1).

22. Transfer system as claimed in claim 21, **characterised in that** a bearing mechanism (80, 81) is respectively provided on each of the distal end regions of the bearing shaft (62), which are secured to the base frame (63) or sub- or support frame (23).

23. Transfer system as claimed in one or more of the preceding claims, **characterised in that** the brake mechanism (35), in particular its brake bar (39, 40), effects a combined vertical and horizontal motion via the rotatably mounted positioning mechanism (44).

24. Transfer system as claimed in one or more of the preceding claims, **characterised in that** the lifting and conveying mechanism (25) effects a combined vertical and horizontal motion via the rotatably mounted positioning mechanism (45).

25. Transfer system as claimed in one or more of the preceding claims, **characterised in that** the brake mechanism (35), in particular at least one brake bar (39, 40) thereof, is displaced by the positioning mechanism (44) into its active position (86) above the conveyor plane (21), being moved in the vertical direction perpendicular to the conveyor plane (21) as well as in the horizontal direction in the direction of the feed direction - arrow (9) - of the first conveyor unit (4; 11).

26. Transfer system as claimed in one or more of the preceding claims, **characterised in that** a stop element (87) is provided for the conveyed goods (3), aligned parallel with the feed direction - arrow (34) - of the lifting and conveying mechanism (25).

27. Transfer system as claimed in claim 26, **characterised in that** the stop element (87) is secured to the bearing frame (29) of the lifting and conveying mechanism (25) and projects above the conveyor plane (26) thereof.

28. Transfer system as claimed in claim 26 or 27, **characterised in that** when the brake mechanism (35), in particular at least one brake bar (39, 40) thereof, is moved into its active position (86) via the positioning mechanism (44), it is moved in the vertical direction perpendicular to the conveyor plane (21) as well as in the horizontal direction in the direction towards the stop element (87).

29. Transfer system as claimed in one or more of claims 26 to 28, **characterised in that**, by reference to the feed direction - arrow (9) - of the first conveyor unit (4; 11), the stop element (87) is disposed in an end region of the brake mechanism (35).

30. Transfer system as claimed in one or more of the preceding claims, **characterised in that** an end (59) of a positioning arm (56) of the positioning mechanism (44) for the brake mechanism (35) spaced at a radial distance apart from the pivot axis (58) or bearing shaft (62) can be displaced starting from a first bottom dead centre (89), through a top dead centre (90) to another bottom dead centre (91) and vice versa.

31. Transfer system as claimed in claim 30, **characterised in that** the end (59) of the positioning arm (56) travels across a displacement path starting from a first bottom dead centre (89), through a top dead centre (90) to another bottom dead centre (91) after a half rotation of the crank drive (55), in particular the crank wheel (75) thereof, and lies at the first bottom dead centre (89) again after a full rotation of the crank drive (55).

32. Transfer system as claimed in claim 30 or 31, **characterised in that** the end (59) of the positioning arm (56) is coupled via an articulated link (60) so as to displace the brake mechanism (35), in particular the brake element (37, 38) or brake bar (39, 40) thereof.

33. Transfer system as claimed in one or more of claims 12 to 32, **characterised in that** a length (68) of the positioning arm (56) for the brake mechanism (35) is longer than a length (69) of the positioning arm (57) for the lifting and conveying mechanism (25).

34. Transfer system as claimed in one or more of claims 12 to 33, **characterised in that**, by reference to its pivot plane (66), the positioning arm (56) for the brake mechanism (35) is more steeply aligned, in particular lies closer to a top dead centre (90) of its pivoting motion when pivoted about the pivot axis (58), than the positioning arm (57) for the lifting and lowering function of the lifting and conveying mechanism (25).

35. Transfer system as claimed in claim 1, **characterised in that** a stop element for the conveyed item (3) is provided in an end region of brake surfaces or brake bars (39, 40) of the brake mechanism (35) by reference to the feed direction - arrow (9) - of the first conveyor unit (4; 11).

## Revendications

1. Installation de transfert (1) pour des marchandises de détail (3) entre un premier dispositif de transport (4;11) et au moins un autre dispositif de transport (5,6) s'étendant transversalement ou angulairement à celui-ci, où les marchandises (3) peuvent être transportées sur un plan de transport sensiblement horizontal (21), ledit plan de transport (21) étant défini soit par au moins deux organes de transport (7,8) d'un premier dispositif de transport (4) pontant l'installation de transfert (1) ou bien par des organes de transport séparés (12,13) d'un premier dispositif de transport (11) réalisés directement à l'installation de transfert (1) où un dispositif de levage et de transport (25) est réalisé dont les organes de transport (27,28) peuvent être relevés et abaissés au-dessus et en dessous du plan de transport (21) pour reprendre les marchandises (3) du premier dispositif de transport (4;11) et pour les transférer sans blocage à l'un des autres dispositifs de transport (5,6), **caractérisée en ce qu'**un dispositif de freinage (35) pouvant être relevé et abaissé au-dessus et en dessous du plan de transport (21) est réalisé pour arriver sélectivement en et hors contact par friction avec un côté inférieur (36) des marchandises (3), où un premier dispositif de positionnement (44) pour le dispositif de freinage (35) pouvant être relevé et abaissé et un deuxième dispositif de positionnement (45) pour le relevage et l'abaissement du dispositif de levage et de transport (25) sont couplés mécaniquement quant au déplacement et sont reliés à seulement un premier dispositif d'entraînement commun (46).

2. Installation de transfert selon la revendication 1, **caractérisée en ce que** le premier dispositif de transport (4;11) comprend dans le plan de transport (21) des organes de transport (7,8; 12,13) espacés les uns des autres, réalisés comme boucle sans fin, s'étendant tout autour, en particulier des chaînes de transport ou des courroies de transport (14,15).

3. Installation de transfert selon la revendication 1 ou 2, **caractérisée en ce que** les organes de transport (27,28) du dispositif de levage et de transport (25) sont formés par une pluralité de rouleaux de transport (30,31) dont les axes de rotation (32,33) s'étendent parallèlement à la direction de transport - flèche (9) - du premier dispositif de transport (4;11).

4. Installation de transfert selon la revendication 3, **caractérisée en ce que** les rouleaux de transport (30,31) sont logés à un châssis de support commun (29) du dispositif de levage et de transport (25).

5. Installation de transfert selon la revendication 4, **caractérisée en ce qu'**un dispositif d'entraînement (51) pour les rouleaux de transport (30,31) est fixé sur le châssis de support (29).

6. Installation de transfert selon la revendication 5, **caractérisée en ce que** le dispositif d'entraînement (51) est lié quant au déplacement par une commande à chaîne ou à courroie (54) à une pluralité de rouleaux de transport (30,31).

7. Installation de transfert selon la revendication 1, **caractérisée en ce que** le premier dispositif d'entraînement (46) comprend un moteur électrique (48) entraînant d'une manière unidirectionnelle.

8. Installation de transfert selon la revendication 1 ou 7, **caractérisée en ce que** le premier dispositif d'entraînement (46) comprend un agencement d'engrenage à auto-blocage, un moteur de freinage ou un autre dispositif de freinage (49) activable selon le besoin pour les dispositifs de positionnement (44,45) du dispositif de freinage (35) et du dispositif de levage et de transport (25).

9. Installation de transfert selon la revendication 1, **caractérisée en ce que** le premier dispositif d'entraînement (46) est couplé quant au déplacement par une commande à manivelle (55) respectivement un agencement de manivelle de poussée ou une commande à bielle (72) avec les dispositifs de positionnement (44,45).

10. Installation de transfert selon la revendication 9, **caractérisée en ce que** le dispositif de freinage (35) et le dispositif de levage et de transport (25), en partant des positions de départ respectivement de repos (84;85) en dessous du plan de transport (21), après un tour complet d'un flasque de manivelle (75) ou d'un bras de manivelle de la commande à manivelle (55) respectivement de la commande à bielle (72), sont ramenés de nouveau dans ces positions de départ respectivement de repos (84;85).

11. Installation de transfert selon l'une ou plusieurs des revendications précédentes, **caractérisée en ce que** les dispositifs de positionnement (44,45) sont formés par au moins un levier oscillant (71) logé d'une manière tournante.

12. Installation de transfert selon la revendication 11, **caractérisée en ce que** le levier oscillant (71) comprend deux bras de positionnement (56,57) espacés respectivement décalés à l'intérieur d'un plan de pivotement (66) selon un angle (67).

13. Installation de transfert selon la revendication 12, **caractérisée en ce qu'**un bras de positionnement (56) est couplé d'une manière mobile avec le dispositif de freinage (35) respectivement un organe de freinage (37,38), et **en ce que** l'autre bras de positionnement (57) est relié d'une manière mobile au châssis de support (29) du dispositif de levage et de transport (25).

14. Installation de transfert selon l'une ou plusieurs des revendications 11 à 13, **caractérisée en ce que** le levier oscillant (71) est réalisé avec trois bras et présente un bras d'entraînement (70) et deux bras de positionnement (56,57).

15. Installation de transfert selon la revendication 14, **caractérisée en ce que** le bras d'entraînement (70) est relié d'une manière articulée à la commande à manivelle (55) respectivement à la commande à bielle (72), en particulier avec la bielle (73) de celle-ci.

16. Installation de transfert selon la revendication 14, **caractérisée en ce que** le bras d'entraînement (70) et les deux bras de positionnement (56,57) sont fixés sur un arbre de support commun (62).

17. Installation de transfert selon la revendication 16, **caractérisée en ce que** les deux bras de positionnement (56,57), dans la direction longitudinale d'un axe de pivotement (58) de l'arbre de support (62), sont disposés à un écart (77) l'un de l'autre.

18. Installation de transfert selon l'une ou plusieurs des revendications précédentes, **caractérisée en ce que** respectivement un premier dispositif de positionnement (44) est associé à deux zones d'extrémité opposées du dispositif de freinage (35), en particulier d'une baguette de freinage (39,40).

19. Installation de transfert selon l'une ou plusieurs des revendications précédentes, **caractérisée en ce que** respectivement un deuxième dispositif de positionnement (45) est associé aux deux zones d'extrémité opposées du châssis de support (29) pour le dispositif de levage et de transport (25).

20. Installation de transfert selon la revendication 18 et/ou 19, **caractérisée en ce que** les premiers dispositifs de positionnement (44) espacés l'un de l'autre sont liés en mouvement par un élément de forme stable respectivement un organe de freinage (37,38) du dispositif de freinage (35) et/ou les deuxièmes dispositifs de positionnement (45) espacés l'un de l'autre par le châssis de support (29).

21. Installation de transfert selon la revendication 16 ou 17, **caractérisée en ce que** l'arbre de support (62) est logé de manière tournante à un châssis de base (63) ou au bâti inférieur respectivement de support (23) de l'installation de transfert (1).

22. Installation de transfert selon la revendication 21, **caractérisée en ce que** respectivement un dispositif de palier (80,81) est associé aux zones d'extrémité frontales distales de l'arbre de support (62), qui est fixé au châssis de base (63) ou au bâti inférieur respectivement de support (23).

23. Installation de transfert selon l'une ou plusieurs des revendications précédentes, **caractérisée en ce que** le dispositif de freinage (35), en particulier sa baguette de freinage (39,40), exécute un mouvement vertical et horizontal combiné par l'intermédiaire du dispositif de positionnement (44) logé d'une manière mobile en rotation.

24. Installation de transfert selon l'une ou plusieurs des revendications précédentes, **caractérisée en ce que** le dispositif de levage et de transport (25) exécute par l'intermédiaire du dispositif de positionnement (45) logé d'une manière mobile en rotation un mouvement vertical et horizontal combiné.

25. Installation de transfert selon l'une ou plusieurs des revendications précédentes, **caractérisée en ce que** le dispositif de freinage (35), en particulier au moins une baguette de freinage (39,40) de celui-ci, lors du déplacement par le dispositif de positionnement (44) est déplacé dans sa position active (86) au-dessus du plan de transport (21), dans la direction verticale perpendiculairement au plan de transport (21) et aussi dans la direction horizontale suivant la direction de transport - flèche (9) - du premier dispositif de transport (4;11).

26. Installation de transfert selon l'une ou plusieurs des revendications précédentes, **caractérisée en ce qu'**un élément de butée (87) orienté parallèlement à la direction de transport - flèche (34) - du dispositif de levage et de transport (25) est réalisée pour les marchandises (3).

27. Installation de transfert selon la revendication 26, **caractérisée en ce que** l'élément de butée (87) est fixé sur le châssis de support (29) du dispositif de levage et de transport (25) et fait saillie sur le plan de transport (26) de celui-ci.

28. Installation de transfert selon la revendication 26 ou 27, **caractérisée en ce que** le dispositif de freinage (35), en particulier sa baguette de freinage (39,40), lors du déplacement par l'intermédiaire du dispositif de positionnement (44), est amené dans sa position active (86) dans la direction verticale perpendiculairement au plan de transport (21) et aussi dans la direction horizontale en direction de l'élément de butée (87).

29. Installation de transfert selon l'une ou plusieurs des revendications 26 à 28, **caractérisée en ce que** l'élément de butée (87), par rapport à la direction de transport - flèche (9) - du premier dispositif de transport (4;11) est disposé dans une zone d'extrémité du dispositif de freinage (35).

30. Installation de transfert selon l'une ou plusieurs des revendications précédentes, **caractérisée en ce qu'**une extrémité (59), espacée radialement de l'axe de pivotement (58) respectivement de l'arbre de support (62), d'un bras de positionnement (56) du dispositif de positionnement (44) pour le dispositif de freinage (35) est déplaçable en partant d'un premier point mort bas (89), par un point mort haut (90) vers un autre point mort bas (91) et inversement.

31. Installation de transfert selon la revendication 30, **caractérisée en ce que** l'extrémité (59) du bras de positionnement (56) parcourt un chemin de déplacement en partant d'un premier point mort bas (89), par un point mort haut (90) vers un autre point mort bas (91) après un demi-tour de la commande à manivelle (55), en particulier de son flasque de manivelle (75) et, après un tour complet de la commande à manivelle (55), se trouve de nouveau au premier point mort bas (89).

32. Installation de transfert selon la revendication 30 ou 31, **caractérisée en ce que** l'extrémité (59) du bras de positionnement (56) est couplée en mouvement par une liaison d'articulation (60) au dispositif de freinage (35), en particulier avec son organe de freinage (37,38) respectivement baquette de freinage (39,40).

33. Installation de transfert selon l'une ou plusieurs des revendications 12 à 32, **caractérisée en ce qu'**une longueur (68) du bras de positionnement (56) pour le dispositif de freinage (35) est plus grande qu'une longueur (69) du bras de positionnement (57) pour le dispositif de levage et de transport (25).

34. Installation de transfert selon l'une ou plusieurs des revendications 12 à 33, **caractérisée en ce que** le bras de positionnement (56) pour le dispositif de freinage (35), par rapport à son plan de pivotement (66), est orienté selon une plus forte pente, en particulier lors d'un pivotement autour de l'axe de pivotement (58), est plus proche d'un point mort haut (90) de son mouvement de pivotement que le bras de positionnement (57) pour la fonction de levage et d'abaissement du dispositif de levage et de transport (25).

35. Installation de transfert selon la revendication 1, **caractérisée en ce qu'**un élément de butée pour les marchandises (3) est réalisé dans une zone d'extrémité de faces de freinage respectivement baquettes de freinage (39,40) du dispositif de freinage (35), par rapport à la direction de transport - flèche (9) - du premier dispositif de transport (4;11).
